# EUROPEAN PATENT APPLICATION

(11) **EP 4 795 959 A1**
(43) Date of publication of application: **26.08.2026**
(21) Application number: 26160379.9
(22) Date of filing: 24.02.2026
(51) Int. Cl.: A41D 13/018, A41D 1/00, G06F 1/16

(54) **WEARABLE PROTECTION DEVICE**

(30) Priority: 25.02.2025 IT 202500003732
(71) Applicant: D-Air Lab S.r.l., 36100 Vicenza (IT)
(72) Inventor: BOTTARELLI, Mirko, 20813 Bovisio Masciago (MB) (IT); RIGAMONTI, Matteo, 20842 Besana in Brianza (MB) (IT); CAUSIN, Jacopo Antonio, 36042 Breganze (VI) (IT)
(74) Representative: PGA S.p.A.

(57) **Abstract**

The present disclosure relates to a wearable protection device (1) comprising an activator (51) engageable with a pressurized gas container (C) and configured to act on said container (C) to allow the piercing thereof, a bladder (2) engaged with the activator (51) and configurable between a deflated condition and an inflated condition, a control unit (50) connected to and active in command on the activator (51). The control unit is configured to receive electrical energy from at least one portable device (200) of a user and is configured to send a command signal to the activator (51) for the piercing of the container (C).

## Description

### TECHNICAL FIELD

The present disclosure relates to a wearable protection device, for example fastened to garments, or integrated therein. The device object of the present disclosure may further define standalone protection elements, such as for example knee pads, back protectors, protections for the head, neck and chest. In particular, the protection device may find application in a plurality of fields to provide protection against impacts, such as sports, industrial and work fields, as well as for the protection of subjects at risk of falling, including elderly persons and persons with reduced mobility.

### BACKGROUND ART

Protection devices are known comprising airbags for protecting the body of a user against impacts. Such protection devices comprise one or more bladders housed in pockets of a garment at critical zones of the body such as the cervical area, the hips, the thorax and the spine. The bladders are placed in fluid communication with a source of pressurized gas, such as a cartridge containing carbon dioxide or other inert gas, controlled by an activator. A control unit receives signals from one or more sensors, such as triaxial acceleration sensors or gyroscopes, and is configured to detect conditions indicative of a fall or collision and to command the activator to allow the rapid inflation of the bladders. The control unit and the sensors require electrical power supplied by a battery integrated in the device.

An example of a wearable protection device is described in JP2021115214A, which comprises an airbag vest with a control unit powered by a battery housed in an internal pocket of the garment and an activator commanded by acceleration sensors to detect fall conditions.

A further example of a wearable protection device is described in CN118423602A, which comprises a portable airbag module intended for the protection of elderly persons, containing a pressurized gas container, an activator and a battery integrated in an outer shell to be fastened to a belt of the user.

A further example of a protection device is described in US2024/032624A1, which comprises a plurality of bladders applicable to different parts of the body of the user and manageable, in whole or in part, by an external portable device such as a smartphone or tablet communicating with the control unit via wireless or wired connection.

However, the known devices have limitations regarding the management of the electrical power supply, thus being improvable in certain aspects.

### OBJECT OF THE DISCLOSURE

The object of the present disclosure is to solve at least one of the drawbacks and/or limitations of the prior solutions. A particular object of the present disclosure is to provide a protection device that allows simplified management of the electrical power supply.

A further object of the present disclosure is to provide a protection device having a modular and compact structure, which allows effective monitoring of the battery charge state.

These objects and others, which will become more apparent from the following description, are achieved by a wearable protection device in accordance with one or more of the appended claims.

### SUMMARY

In a 1st aspect, a protection device (1) is provided, in particular of the wearable type, said protection device (1) comprising:
- at least one activator (51) engageable with a pressurized gas container (C), the activator (51) being configured to act on the container (C) to allow the piercing thereof and the consequent outflow of gas,
- at least one bladder (2) engaged with the activator (51) and configurable between a deflated condition and an inflated condition, optionally following the piercing of the container by the activator (51),
- a control unit (50) connected to and active in command on the activator (51), wherein the control unit (50) is configured to send a command signal to the activator (51) for the piercing of the container (C).

In a 1bis aspect according to the preceding aspect, the protection device (1) comprises at least one pressurized gas container (C). In a 2nd aspect according to any one of the two preceding aspects, the control unit (50) is configured to receive electrical energy from at least one portable device (200), optionally of a user (U). In a 3rd aspect according to the preceding aspect, the control unit (50) is connected to the activator (51), optionally for commanding the release of pressurized gas from the container (C). In a 4th aspect according to any one of the two preceding aspects, the control unit (50) is configured to be connected to the at least one portable device (200) to be electrically powered. In a 5th aspect according to any one of the preceding aspects, the control unit (50) is configured to be powered by a voltage comprised between 3.5 and 5 Volt, optionally substantially equal to 5 Volt. In a 6th aspect according to any one of the preceding aspects, the control unit (50) is connectable to the at least one portable device by at least one of: cable, wireless, magnetic induction, reverse wireless charging. In a 7th aspect according to any one of the preceding aspects, the control unit (50) is configured to be connected to the at least one portable device (200) by at least one of the following cables: USB-C, Micro-USB, Lightning, USB-A. In an 8th aspect according to any one of the preceding aspects, the control unit (50) is configured to electrically connect to the at least one portable device (200) by USB-C cable.

In a 9th aspect according to any one of the preceding aspects, the control unit (50) is configured to receive from the at least one portable device (200) at least one of:
- an electrical power supply signal, optionally an electrical signal having a voltage substantially equal to 5 Volt,
- at least one data signal representative of a condition of the user,
- at least one command signal.

In a 10th aspect according to any one of the preceding aspects, the control unit (50) is configured to:
- receive at least one signal representative of a condition of the user,
- compare the received signal with at least one value of a safety parameter,
- determine, as a function of the comparison, the presence of a warning condition for the user and,
- if said warning condition is determined, send a command signal to the activator (51) to allow the piercing of the container (C) and thereby determine the inflated condition of the bladder (2).

In an 11th aspect according to any one of the preceding aspects, the protection device (1) comprises at least one sensor configured to emit said signal representative of a condition of the user. In a 12th aspect according to the preceding aspect, the control unit (50) is configured to:
- receive the signal from the at least one sensor,
- compare the signal received from the sensor with at least one value of a safety parameter,
- determine, as a function of the comparison, the presence of a warning condition for the user and,
- if said warning condition is determined, send a command signal to the activator (51) to allow the piercing of the container (C) and thereby determine the inflated condition of the bladder (2).

In a 13th aspect according to any one of the two preceding aspects, the at least one sensor comprises at least one of: a gyroscope, an accelerometer, a GPS, a barometer, a camera, a light sensor.

In a 14th aspect according to any one of the aspects from the 11th to the preceding aspect, the control unit (50) is configured to receive electrical energy from the at least one portable device (200) usable for the electrical power supply of the control unit (50) itself and of the at least one sensor. In a 15th aspect according to any one of the aspects from the 11th to the preceding aspect, the at least one sensor is configured to receive an electrical power supply having a voltage comprised between 3.5 and 5 Volt, optionally substantially equal to 5 Volt.

In an aspect 15-bis according to any one of the preceding aspects the control unit (50) is configured to receive electrical energy to be electrically powered from at least one portable device (200) connected to the control unit (50).

In an aspect 15-ter according to any one of the preceding aspects the protection device is devoid of a primary power supply source integrated in the protection device or integrated in the control unit (50).

In an aspect 15-quater according to any one of the preceding aspects the portable device (200) comprises at least one of: a smartphone, a tablet, a portable battery.

In an aspect 15-quinquies according to any one of the preceding aspects the control unit (50) is configured to be powered by a voltage comprised between 3.5 Volt and 5 Volt, optionally substantially equal to 5 Volt.

In an aspect 15-sexies according to any one of the preceding aspects the control unit (50) is devoid of an input voltage converter, optionally of the DC-DC type, configured to reduce the voltage received from the portable device (200) to 5 Volt.

In an aspect 15-septies according to any one of the preceding aspects the control unit (50) is devoid of circuitry dedicated to the conversion, optionally to the step-down, of an input voltage signal to the same control unit.

In an aspect 15-octies according to any one of the preceding aspects the control unit (50) is connectable to the portable device by a cable (75).

In an aspect 15-novies according to any one of the preceding aspects the control unit (50), via the cable (75), is configured to receive exclusively electrical energy for its own power supply, without data transfer.

In an aspect 15-decies according to any one of the preceding aspects the control unit (50) is configured to electrically connect to the at least one portable device (200) by USB-C cable.

In an aspect 15-undecies according to any one of the three preceding aspects the cable (75) includes a USB-C cable.

In an aspect 15-duodecies according to any one of the preceding aspects the control unit (50) comprises or is connected to a wireless communication module (55) of the protection device, for the exchange of data with the portable device (200).

In an aspect 15-terdecies according to the preceding aspect the wireless communication module (55) is configured to exclusively exchange data with the portable device (200), without transfer of electrical energy intended for the power supply of the control unit (50).

In an aspect 15-quaterdecies according to any one of the two preceding aspects the wireless communication module comprises at least one of a Bluetooth module, WiFi and NFC.

In an aspect 15-quindecies according to any one of the preceding aspects the control unit (50) is configured to be uninterruptedly powered by the portable device (200) for the entire duration of use of the protection device (1).

In an aspect 15-sexdecies according to any one of the preceding aspects the portable device (200) is removably engaged with the control unit (50) of the protection device.

In an aspect 15-septiesdecies according to any one of the preceding aspects in combinations with any one of the preceding aspects from 15-octies to 15-undecies the cable (75) connecting the control unit (50) of the protection device with the mobile device comprises a light indicator (80), optionally an LED, configured for generating one or more light signals.

In an aspect 15-duodevicies according to the preceding aspect the control unit (50) is connected to the light indicator (80) and is configured to command the emission of said one or more light signals representative of at least one, optionally all, of the following operative conditions:
- presence of electrical power supply between the control unit (50) and the portable device (200),
- insufficient charge state of a battery of the portable device (200).

In an aspect 15-undevicies according to the preceding aspect the control unit (50) is configured to vary at least one of: light intensity, color and flashing frequency of the light indicator (80) as a function of the operative condition.

In an aspect 15-vicies according to any one the preceding aspects the wearable protection device comprises a GPS module (S3) configured to generate a positioning signal representative of a travel speed of the user.

In an aspect 15-vicies bis according to the preceding aspect the control unit (50) is further configured to:
- receive the positioning signal from the GPS module (S3),
- compare said positioning signal with a threshold speed value, optionally greater than 5 km/h, even more optionally comprised between 5 km/h and 15 km/h.

In an aspect 15-vicies ter according to the preceding aspect the control unit id further configured to allow the sending of an activation command to the activator (51) when the positioning signal is equal to or greater than the threshold speed value.

In an aspect 15-vicies quater according to any one the preceding aspects the control unit (50) is further configured to:
- receive a travel speed signal generated by the portable device (200), optionally by a GPS module of the portable device,
- compare the travel speed signal received from the portable device (200) with the threshold speed value.

In an aspect 15-vicies quinquies according to the preceding aspect the control unit is configured to allow the sending of an activation command to the activator (51) when both the positioning signal from the GPS module (S3) of the protection device (1) and the travel speed signal from the portable device (200) are equal to or greater than the threshold speed value.

In an aspect 15-vicies sexies according to any one the five preceding aspects the control unit (50), if it detects the absence or interruption of the positioning signal from the GPS module (S3), is configured to emit an alarm signal.

In an aspect 15-vicies septies according to the preceding aspect the alarm signal comprises:
- a light signal, optionally emitted via the light indicator (80), and/or
- a warning signal on the portable device (200) comprising at least one of an acoustic signal and a vibration.

In an aspect 15-vicies octies according to any one the preceding aspects the control unit (50) comprises a memory (52) in which personal data relating to the user of the protection device are stored, optionally said personal data comprising at least one of: age, weight, height, physical conditions of the user,
wherein the control unit (50) is configured to select an activation algorithm from a plurality of activation algorithms stored in the memory (52) as a function of said personal data.

In an aspect 15-vicies novies according to the preceding aspect each activation algorithm defines evaluation criteria for signals generated by sensors of the protection device, for example said sensors comprising one or more accelerometers or gyroscopes, on the basis of which the activator (51) is commanded.

In an aspect 15-tricies according to any one the preceding aspects the control unit (50) of the protection device is configured to:
- receive a signal representative of a charge state of a battery of the portable device (200),
- compare a value of the charge state signal with a threshold charge value, optionally comprised between 5% and 25% of a total charge of the battery.

In an aspect 15-tricies bis according to the preceding aspect the control unit is further configured to command the emission of at least one alarm signal when the value of the charge state signal is lower than the threshold charge value.

In an aspect 15-tricies ter according to the preceding aspect said alarm signal comprises at least one of:
- a light signal, optionally emitted by the light indicator (80) of the protection device (1),
- an acoustic signal emitted by the portable device (200),
- a vibration generated by the portable device (200).

In a 16th aspect according to any one of the preceding aspects, the activator (51) is configured to allow the outflow of gas from the pressurized gas container to allow the transition of the bladder (2) from the deflated condition to the inflated condition. In a 17th aspect according to any one of the preceding aspects, the activator (51) comprises:
- a housing (52) defining therein a seat and further comprising:
   ∘ at least one through access configured to receive at least a part of a pressurized gas container,
   ∘ at least one passage opening placing the seat in fluid communication with the through access,
   ∘ a piercer accommodated in the seat of the housing (52) and movable at least between:
      ▪ a first operative position in which the piercer is spaced apart from the passage opening,
      ▪ a second operative position in which at least a part of the piercer passes through said passage opening.

In an 18th aspect according to the preceding aspect, the housing (52) extends between a first and a second end (52a, 52b), along an extension direction, wherein the seat extends along the extension direction. In a 19th aspect according to any one of the two preceding aspects, the through access of the housing (52) is defined at the second end (52b) and is configured to receive at least a part of a pressurized gas container. In a 20th aspect according to any one of the three preceding aspects, said at least one passage opening is defined in the housing (52) and places the seat in fluid communication with the through access. In a 21st aspect according to any one of the preceding aspects, the activator (51) comprises at least one piercer configured to allow the opening of the pressurized gas container (C) for the transition of the bladder from the deflated condition to the inflated condition. In a 22nd aspect according to the preceding aspect, the piercer is accommodated in the seat of the housing (52) and is movable at least between:
- a first operative position in which the piercer is spaced apart from the passage opening,
- a second operative position in which at least a part of the piercer passes through said passage opening.

In a 23rd aspect according to any one of the aspects from the 17th to the preceding aspect, the piercer, optionally in the first and in the second operative position, faces the passage opening of the housing. In a 24th aspect according to any one of the aspects from the 17th to the preceding aspect, the piercer, in the first operative position, is configured to be spaced apart from the pressurized gas container (C) engageable with the housing. In a 25th aspect according to any one of the aspects from the 17th to the preceding aspect, the piercer, in the second operative position, is configured to pierce at least a part of the pressurized gas container (C) engageable with the housing (52).

In a 26th aspect according to any one of the aspects from the 17th to the preceding aspect, the housing (52) comprises a hollow body having a through cavity extending from the first to the second end (52a, 52b) of the housing (52). In a 27th aspect according to any one of the aspects from the 17th to the preceding aspect, the housing (52) has an auxiliary access defined at the first end (52a) opposite to the through access defined at the second end (52b).

In a 28th aspect according to any one of the aspects from the 17th to the preceding aspect, the housing (52) has at least one through opening (59) configured to place the seat in fluid communication with the environment external to the housing. In a 29th aspect according to the preceding aspect, the through opening (59) is defined at the passage opening of the housing. In a 30th aspect according to any one of the two preceding aspects, the at least one through opening (59) is interposed between the passage opening of the housing (52) and the first end (52a). In a 31st aspect according to any one of the aspects from the 17th to the preceding aspect, the housing (52) comprises a hollow body having a lateral wall with a predetermined thickness. In a 32nd aspect according to the preceding aspect, said at least one through opening passes through the entire thickness of the lateral wall of the housing. In a 33rd aspect according to any one of the aspects from the 28th to the preceding aspect, the at least one through opening comprises at least one hole. In a 34th aspect according to any one of the aspects from the 28th to the preceding aspect, the at least one through opening has a plurality of through openings. In a 35th aspect according to any one of the aspects from the 28th to the preceding aspect, the at least one through opening has a number of through openings comprised between 2 and 12, optionally comprised between 4 and 10.

In a 36th aspect according to any one of the preceding aspects, the activator (51) comprises a pusher placed at least in part in the housing (52), configured to move the piercer from the first to the second operative position to allow the opening of the pressurized gas container (C). In a 37th aspect according to the preceding aspect, the control unit (50) is active in command on the pusher. In a 38th aspect according to any one of the preceding aspects, the pusher is configured to receive a command signal from the control unit (50) and, following reception of said command signal, act on the piercer to move the latter from the first to the second operative position.

In a 39th aspect according to any one of the aspects from the 36th to the 40th, the pusher comprises at least one pyrotechnic charge. In a 40th aspect according to the preceding aspect, the pyrotechnic charge is configured to be triggered by means of electrical energy, in particular electrical current. In a 41st aspect according to any one of the two preceding aspects, the control unit (50), following the determination of a warning condition, is configured to send the command signal directly to the pyrotechnic charge to allow the triggering and the consequent movement of the piercer from the first to the second operative position. In a 42nd aspect according to any one of the preceding aspects, the command signal sent by the control unit (50) to the pyrotechnic charge comprises a predetermined electrical current configured to allow the triggering of the pyrotechnic charge.

In a 43rd aspect according to any one of the aspects from the 17th to the preceding aspect, the housing (52) comprises an abutment (58) arranged at least in part in the housing (52). In a 44th aspect according to the preceding aspect, the abutment (58) is configured to contact the piercer when in the first operative position. In a 45th aspect according to any one of the two preceding aspects, the abutment (58) is configured to define an end-stop element for the piercer. In a 46th aspect according to any one of the aspects from the 43rd to the preceding aspect, said at least one through opening (59) is interposed between the passage opening and the abutment (58).

In a 47th aspect according to any one of the aspects from the 43rd to the preceding aspect, the abutment (58) comprises a cavity configured to accommodate the pusher, optionally said at least one pyrotechnic charge. In a 48th aspect according to the preceding aspect, the cavity faces the piercer. In a 49th aspect according to any one of the two preceding aspects, the cavity is in direct fluid communication with the seat.

In a 50th aspect according to any one of the preceding aspects, the piercer is movable between the first and the second operative positions, and vice versa, along a direction parallel to the extension direction of the housing (52).

In a 51st aspect according to any one of the preceding aspects, the pressurized gas container (C) comprises a head configured to be inserted in the access of the housing, wherein the head of the container comprises an opening configured to allow the outflow of the pressurized gas. In a 52nd aspect according to the preceding aspect, the piercer (53), during the transition between the first and the second operative position, is configured to define a through opening at the head of the container (C) to allow the outflow of the pressurized gas and consequently the transition of the bladder from the deflated condition to the inflated condition. In a 53rd aspect according to any one of the two preceding aspects, the container (C) comprises a membrane closing the opening of the container (C). In a 54th aspect according to the preceding aspect, the membrane is at least in part made of metallic material. In a 55th aspect according to any one of the two preceding aspects, the piercer (53), during the transition between the first and the second operative position, is configured to break the membrane of the container to allow the outflow of the gas. In a 56th aspect according to any one of the preceding aspects, the pressurized gas container (C) comprises a pressurized gas cylinder. In a 57th aspect according to any one of the preceding aspects, the gas present in the pressurized gas container (C) comprises carbon dioxide. In a 58th aspect according to any one of the preceding aspects, the gas of the pressurized gas container (C) has a pressure, optionally in the closed condition of the container, comprised between 30 bar and 70 bar, optionally between 45 bar and 65 bar; optionally said pressure being measured at a gas temperature of 20 °C. In a 59th aspect according to any one of the preceding aspects, the pressurized gas container (C) has a quantity of carbon dioxide comprised between 5 g and 80 g, optionally between 20 g and 40 g. In a 60th aspect according to the preceding aspect, the quantity of carbon dioxide present in the pressurized gas container (C) may be measured by a weighing method; optionally said weighing method comprises weighing the container before and after filling, wherein the weight difference substantially corresponds to the quantity of carbon dioxide.

In a 61st aspect according to the preceding aspect, the bladder (2) comprises at least one engagement portion (V1) engageable externally to the activator (51), said bladder being configured to receive a gas flow exiting from the latter and arriving from the pressurized gas container (C). In a 62nd aspect according to the preceding aspect, the bladder (2) comprises:
- at least one protection zone (Z1, Z2, Z3) configured to define the part of the bladder (2) adapted to protect a user from impacts,
- a manifold (40) integrally joined to the protection zone.

In a 63rd aspect according to the preceding aspect, the manifold (40) is integrally joined to the protection zone and placed in direct fluid communication with said zone. In a 64th aspect according to any one of the two preceding aspects, the protection zone and the manifold (40) define a single internal volume of the bladder (40).

In a 65th aspect according to any one of the three preceding aspects, the activator (51) is at least partly accommodated in the bladder (2), optionally in the manifold (40). In a 66th aspect according to any one of the four preceding aspects, a preponderant part of the activator (51) is accommodated in the manifold (40).

In a 67th aspect according to any one of the five preceding aspects, at least the part of the housing (52) extending from the first end (52a) up to the at least one through opening (59) is substantially arranged in the manifold (40). In a 68th aspect according to any one of the six preceding aspects, the activator (51), optionally the housing (52), comprises a coupling portion (V3) arranged between the second end (52b) and the at least one through opening (59), wherein said coupling portion (V3) is configured to allow the engagement of the housing with the bladder (2), in particular with the manifold (40). In a 69th aspect according to the preceding aspect, the coupling portion (V3) comprises at least one of: an external thread, a bayonet system, a quick-release coupling.

In a 70th aspect according to any one of the preceding aspects, the engagement portion (V1) of the activator (51) configured to engage the container (C) is defined in the housing (52) while the coupling portion (V3) is defined externally to the housing, in opposition to the engagement portion (V1) of the same housing. In a 71st aspect according to any one of the preceding aspects, the engagement portion (V1) comprises an internal thread opposite to an external thread defined by the coupling portion (V3) of the same housing.

In a 72nd aspect according to any one of the preceding aspects, the bladder (2) is engaged at the at least one through opening (59) of the housing (52).

In a 73rd aspect according to any one of the preceding aspects, the activator (51) may comprise a connector (70) configured to connect and place in fluid communication the bladder (2) with the internal volume of the housing. In a 74th aspect according to the preceding aspect, the connector (70) is, on one side, constrained to the coupling portion (V3) of the housing (52) and, on the other side, is engaged inside the manifold (40) of the bladder (2). In a 75th aspect according to any one of the preceding aspects, the control unit (50), optionally the at least one sensor, is placed outside the bladder. In a 76th aspect according to any one of the preceding aspects, the control unit (50) is connected to the activator (51) by at least one cable, optionally a pair of electrical cables, wherein said at least one cable extends from the activator (51), inside the bladder. In a 77th aspect according to the preceding aspect, the at least one cable exits the bladder, optionally exits the manifold (40).

In a 78th aspect according to any one of the preceding aspects, the bladder (2) comprises at least one wall made of sheet material delimiting an internal volume and having a first and a second portion facing each other, wherein the bladder (2) is configurable between:
- a deflated condition in which the first and second portion of the at least one wall, for a preponderant part of their own surface extension, are juxtaposed and at least partly in contact with each other,
- an inflated condition in which the first and second portion of the at least one wall, for a preponderant part of their own surface extension, are spaced apart, wherein said at least one wall, in the inflated condition, defines an internal volume greater than the internal volume defined by the same wall in the deflated condition.

In a 79th aspect according to any one of the preceding aspects, the bladder (2) comprises a plurality of side-by-side segments (2'), each of which extends along a respective extension trajectory. In an 80th aspect according to the preceding aspect, at least one of said segments (2') further comprises one or more peripheral engagement portions. In an 81st aspect according to any one of the two preceding aspects, each segment (2') comprises at least one wall made of sheet material delimiting an internal volume and having a first and a second portion facing each other. In an 82nd aspect according to the preceding aspect, the bladder (2) is configurable between:
- a deflated condition in which the first and second portion of the at least one wall of each segment (2'), for a preponderant part of their own surface extension, are juxtaposed and at least partly in contact with each other,
- an inflated condition in which the first and second portion of the at least one wall of each segment (2'), for a preponderant part of their own surface extension, are spaced apart, wherein said at least one wall, in the inflated condition, defines an internal volume greater than the internal volume defined by the same wall in the deflated condition.

In an 83rd aspect according to any one of the preceding aspects, the protection device (1) comprises at least one covering (3) made of sheet material and defining a compartment (V) in which the bladder (2) is accommodated. In an 84th aspect according to the preceding aspect, the at least one covering (3) comprises a first and a second covering (4, 5) made of sheet material constrained to each other at a peripheral portion.

In an 85th aspect according to any one of the two preceding aspects, at least a part of the peripheral engagement portion of at least one segment of the bladder (2) is fastened to, or in proximity to, the at least one covering, optionally to the first and/or second covering (4, 5). In an 86th aspect according to any one of the three preceding aspects, the bladder (2) is fastened to the at least one covering (3) by stitching.

In a 86bis aspect according to any one of the preceding aspects, the bladder (2) is made of deformable material. In an 87th aspect according to any one of the preceding aspects, the bladder (2) is elastically deformable. In an 88th aspect according to any one of the preceding aspects, the bladder (2) is made at least in part of plastic material, optionally a film of plastic material. In an 89th aspect according to any one of the preceding aspects, the bladder (2) defines a gas-impermeable structure. In a 90th aspect according to any one of the preceding aspects, the at least one wall of the bladder (2) is gas-impermeable.

In a 91st aspect according to any one of the preceding aspects, the bladder (2) is made at least in part of at least one of the following materials: polyurethane, PVC, EVA, polyethylene, polypropylene, silicone rubber, rubber.

In a 92nd aspect according to any one of the preceding aspects, the material of the bladder (2) has an elongation percentage greater than 50%, optionally greater than 200%. In a 93rd aspect according to any one of the preceding aspects, the material of the bladder (2) has an elastic modulus lower than 70 MPa, optionally greater than 60 MPa, even more optionally comprised between 10 and 50 MPa.

In a 94th aspect according to any one of the preceding aspects, the bladder (2), during the transition from the deflated condition to the inflated condition, is configured to deform substantially in an elastic manner.

In a 96th aspect according to any one of the aspects from the 83rd to the preceding aspect, the bladder (2) is at least partly counter-shaped to an internal surface delimiting the compartment of the at least one covering (3). In a 97th aspect according to any one of the aspects from the 83rd to the preceding aspect, the bladder (2), in the inflated condition and in the deflated condition, is configured to occupy substantially the entire internal volume of the compartment (V) of the at least one covering (3). In a 98th aspect according to any one of the preceding aspects, the bladder (2), in the deflated condition, defines a substantially slab-like structure (optionally uni-planar).

In a 99th aspect according to any one of the preceding aspects, the bladder (2), in the deflated condition, is configured to occupy substantially the entire compartment (V) of the at least one covering (3). In a 100th aspect according to any one of the preceding aspects, the bladder (2), in the inflated condition, occupies a predetermined volume, wherein the ratio between the internal volume defined by the housing, in the inflated condition of the bladder, and the predetermined volume occupied by said bladder is less than 1, optionally comprised between 0.7 and 0.97, even more optionally between 0.9 and 0.96.

In a 101st aspect according to any one of the aspects from the 79th to the preceding aspect, each segment (2') has a substantially elongated conformation, optionally developing along the extension trajectory. In a 102nd aspect according to any one of the aspects from the 79th to the preceding aspect, two immediately adjacent segments have substantially the same length; optionally said length is measured along the extension trajectory.

In a 103rd aspect according to any one of the preceding aspects, the bladder (2) has, in the deflated condition, a first surface extension smaller than a second surface extension defined by the same bladder when in the inflated condition. In a 104th aspect according to the preceding aspect, the ratio between the second surface extension and the first surface extension of the bladder is greater than 1.5, optionally comprised between 2 and 7, even more optionally between 2 and 6.

In a 105th aspect according to any one of the aspects from the 79th to the preceding aspect, the bladder (2) has a number of segments equal to or greater than 2, optionally comprised between 2 and 30 inclusive. In a 106th aspect according to any one of the aspects from the 79th to the preceding aspect, the bladder (2) comprises:
- at least a first series of segments comprising two or more side-by-side segments,
- at least a second series of segments comprising two or more side-by-side segments.

In a 107th aspect according to the preceding aspect, the segments of the first series, in the inflated condition, have substantially parallel extension trajectories. In a 108th aspect according to any one of the two preceding aspects, the segments of the second series, in the inflated condition, have substantially parallel extension trajectories. In a 109th aspect according to any one of the three preceding aspects, the segments of the first series and the segments of the second series, in the inflated condition of the segments of both series, are spaced apart from each other.

In a 110th aspect according to any one of the aspects from the 79th to the preceding aspect, the plurality of segments of the bladder (2) is in fluid communication. In a 111th aspect according to any one of the aspects from the 79th to the preceding aspect, the bladder (2) comprises at least one connecting section (20) that places in fluid communication the plurality of side-by-side segments. In a 112th aspect according to the preceding aspect, the plurality of side-by-side segments emerge from a same side of the connecting section (20) of the bladder (2). In a 113th aspect according to any one of the two preceding aspects, the bladder (2) comprises a connecting section (20) for each series of segments. In a 114th aspect according to any one of the three preceding aspects, the connecting section (20) is accommodated in the compartment (V) of the at least one covering (3).

In a 115th aspect according to any one of the four preceding aspects, the connecting section (20) extends along a respective extension trajectory transverse to, optionally orthogonal to, the extension trajectory of the segments emerging directly from said connecting section.

In a 116th aspect according to any one of the five preceding aspects, the at least one connecting section is connected to the longitudinal ends of the plurality of segments. In a 117th aspect according to any one of the six preceding aspects, the at least one connecting section (20) comprises a first and a second connecting section opposite to each other with respect to the plurality of segments. In a 118th aspect according to any one of the seven preceding aspects, the first and second connecting section are connected to each other and placed in fluid communication by the plurality of segments.

In a 119th aspect according to any one of the preceding aspects, the bladder (2) comprises at least one manifold (40). In a 120th aspect according to the preceding aspect, the manifold (40) places in fluid communication the series of segments of the bladder (2). In a 121st aspect according to any one of the two preceding aspects, the manifold (40) is placed in direct fluid communication with at least one connecting section (20).

In a 122nd aspect according to any one of the aspects from the 84th to the preceding aspect, the first and second covering (4, 5), for a preponderant part of their surface extension (optionally at least for 95% of their own surface extension), are spaced apart from each other, optionally by interposition of the bladder (2). In a 123rd aspect according to any one of the aspects from the 84th to the preceding aspect, the first portion of each segment is directly facing and in contact with the first covering (4) while the second portion of each segment is directly facing and/or in contact with the second covering (5). In a 124th aspect according to any one of the aspects from the 84th to the preceding aspect, the first and the second portion of each segment are respectively in contact with the first and second covering (4, 5) both in the inflated condition and in the deflated condition of the bladder (2). In a 125th aspect according to any one of the preceding aspects, solely the first portions of the plurality of segments, in the inflated condition and in the deflated condition of the bladder (2), are spaced apart from each other and in direct contact with the covering, optionally with the first covering.

In a 126th aspect according to any one of the aspects from the 84th to the preceding aspect, at least a peripheral portion of the first and second covering (4, 5) are fastened to each other, optionally by stitching.

In a 127th aspect according to any one of the aspects from the 83rd to the preceding aspect, the at least one covering (3) is made at least in part, optionally entirely, of gas-permeable sheet material. In a 128th aspect according to any one of the aspects from the 83rd to the preceding aspect, the at least one covering (3) is made of at least partly perforated sheet material. In a 129th aspect according to any one of the aspects from the 83rd to the preceding aspect, the at least one covering (3) is made at least in part, optionally entirely, of woven material. In a 130th aspect according to any one of the aspects from the 83rd to the preceding aspect, the at least one covering (3) is made at least in part, optionally entirely, of at least one of the following materials: polyester, nylon, cotton. In a 131st aspect according to any one of the aspects from the 83rd to the preceding aspect, the at least one covering (3) is made of deformable material. In a 132nd aspect according to any one of the aspects from the 84th to the preceding aspect, the first covering (4) is made of perforated material. In a 133rd aspect according to any one of the aspects from the 84th to the preceding aspect, the second covering is made of woven material, optionally devoid of holes.

In a 134th aspect according to any one of the aspects from the 83rd to the preceding aspect, the at least one covering is made of a material that is more rigid than a material of the bladder. In a 135th aspect according to any one of the aspects from the 83rd to the preceding aspect, the at least one covering has, in the deflated condition of the bladder (2), a surface extension substantially equal to the surface extension of the housing when the bladder is in the inflated condition.

In a 136th aspect according to any one of the aspects from the 83rd to the preceding aspect, the material of the at least one covering (3), optionally of the first and second covering, has an elongation percentage lower than 100%, optionally lower than 50%. In a 137th aspect according to any one of the aspects from the 83rd to the preceding aspect, the material of the at least one covering (3), optionally of the first and second covering, has an elastic modulus greater than 50 MPa, optionally greater than 200 MPa. In a 138th aspect according to any one of the aspects from the 84th to the preceding aspect, the material of the second covering has an elastic modulus comprised between 1500 and 3500 MPa.

In a 139th aspect according to any one of the aspects from the 83rd to the preceding aspect, the compartment (V) of the at least one covering (3) is substantially closed. In a 140th aspect according to any one of the aspects from the 83rd to the preceding aspect, the compartment (V) of the at least one covering has a closed internal volume. In a 141st aspect according to any one of the aspects from the 83rd to the preceding aspect, the at least one covering has a single compartment (V) delimiting a single closed internal volume.

In a 142nd aspect according to any one of the aspects from the 84th to the preceding aspect, the first and second covering, in at least one of the deflated and inflated condition of the bladder, are kept at a distance, for a preponderant part of the surface extension of said coverings (for example, at least for 80%, optionally at least for 95%, of the surface extension of said coverings 4, 5) by interposition of the bladder (2).

In a 143rd aspect according to any one of the aspects from the 84th to the preceding aspect, the first and second covering (4, 5), optionally in the deflated condition and in the inflated condition of the bladder (2), have a maximum distance from each other defining a thickness or height of the at least one covering. In a 144th aspect according to the preceding aspect, the height (or thickness) of the at least one covering (3), in the deflated condition of the bladder (2), is less than 3 cm, optionally comprised between 0.1 and 2 cm. In a 145th aspect according to any one of the aspects from the 84th to the preceding aspect, the first and second covering, in the inflated condition of the bladder (2), have a maximum distance from each other defining a thickness or height of the at least one covering (3). In a 146th aspect according to any one of the two preceding aspects, the height (or thickness) of the at least one covering (3), in the inflated condition of the bladder (2), is greater than the height (or thickness) of the same covering (3) when the bladder (2) is in the deflated condition. In a 147th aspect according to any one of the three preceding aspects, the ratio between the height (or thickness) of the at least one covering (3), in the inflated condition of the bladder (2), and the height (or thickness) of the same covering (3) when the bladder (2) is in the deflated condition is equal to or greater than 5, optionally comprised between 6 and 20. In a 148th aspect according to any one of the four preceding aspects, the height (or thickness) of the at least one covering (3), in the inflated condition of the bladder, is greater than 2 cm, optionally comprised between 4 and 20 cm.

In a 149th aspect according to any one of the aspects from the 83rd to the preceding aspect, the at least one covering (3), in the deflated condition of the bladder and in a condition laid flat on an ideal plane, has a substantially slab-like shape. In a 150th aspect according to any one of the aspects from the 83rd to the preceding aspect, the covering (3), in the deflated condition of the bladder and in a condition laid flat on an ideal plane, is delimited by an outer perimeter edge that delimits a first area, wherein said outer perimeter edge of the at least one covering, in the inflated condition and in a condition substantially laid flat on an ideal plane, defines a second area, wherein the ratio between said second area and first area is equal to or less than 1, optionally comprised between 0.9 and 1.

In a 151st aspect according to any one of the aspects from the 83rd to the preceding aspect, the control unit (50), optionally the at least one sensor, is accommodated in the at least one covering (3). In a 152nd aspect according to any one of the aspects from the 83rd to the preceding aspect, the portable device (200) is arranged outside the compartment of the at least one covering (3). In a 153rd aspect according to any one of the aspects from the 83rd to the preceding aspect, the at least one covering (3) comprises a through opening (3') configured to allow the electrical connection of the portable device to the control unit (50), optionally by cable.

In a 154th aspect according to any one of the preceding aspects, the protection device (1) comprises at least one support (10) configured to engage and support at least one portable device (200). In a 155th aspect according to the preceding aspect, the support (10) is constrained to the inner and/or outer covering (4, 5). In a 156th aspect according to any one of the two preceding aspects, the support is constrained to the outer covering (5).

In a 157th aspect according to any one of the preceding aspects, the at least one covering (3) comprises a pocket in which the pressurized gas container (C) is accommodated.

In a 158th aspect according to any one of the preceding aspects, the protection device (1) comprises at least one portable device (200). In a 159th aspect according to the preceding aspect, the portable device (200) is connected to the control unit (50) and is configured to electrically power the latter. In a 160th aspect according to any one of the two preceding aspects, the portable device (200) is configured to provide the control unit (50) with an output voltage between 3.5 and 5 Volt, optionally substantially equal to 5 Volt. In a 161st aspect according to any one of the three preceding aspects, the portable device (200) is connected to the control unit (50) by at least one of: cable (75), wireless, magnetic induction, reverse wireless charging. In a 162nd aspect according to any one of the four preceding aspects, the portable device (200) is connected to the control unit (50) by at least one cable of the type: USB-C, Micro-USB, Lightning, USB-A. In a 163rd aspect according to any one of the five preceding aspects, the portable device (200) is configured to send to the control unit (50) at least one of:
- an electrical power supply signal, optionally an electrical signal having a voltage substantially equal to 5 Volt,
- at least one data signal representative of a condition of the user,
- at least one command signal.

In a 164th aspect according to any one of the six preceding aspects, the control unit (50) is configured to:
- receive at least one signal representative of a condition of the user from the at least one sensor of the protection device (1), optionally from the at least one sensor directly connected to the control unit (50),
- compare the received signal with at least one value of a safety parameter,
- determine, as a function of the comparison, the presence of a warning condition for the user and,
- if said warning condition is determined, send a command signal to the activator (51) to allow the piercing of the container (C) and thereby determine the inflated condition of the bladder (2).

In a 165th aspect according to any one of the preceding aspects, the portable device (200) comprises at least one of: a smartphone, a tablet. In a 166th aspect according to any one of the preceding aspects, the portable device (200) is configured to be connected to the control unit (50) via USB cable and is configured to manage the communication and the power supply with said control unit (50).

In a 167th aspect according to any one of the preceding aspects, the portable device (200) comprises at least one sensor configured to emit a signal representative of a condition of the user. In a 168th aspect according to the preceding aspect, the at least one sensor of the portable device (200) comprises at least one of: a gyroscope, an accelerometer, a GPS, a barometer, a camera, a light sensor.

In a 169th aspect according to any one of the two preceding aspects, the control unit (50) is configured to:
- receive the signal from the at least one sensor of the protection device directly connected to the control unit (50),
- receive the signal from the at least one sensor of the portable device (200),
- compare the signals received from the sensors with at least one value of a safety parameter,
- determine, as a function of the comparison, the presence of a warning condition for the user and,
- if said warning condition is determined, send a command signal to the activator (51) to allow the piercing of the container (C) and thereby determine the inflated condition of the bladder (2).

In a 171st aspect according to any one of the preceding aspects, the portable device (200) comprises a graphical interface (GI), optionally a touch-screen. In a 172nd aspect according to the preceding aspect, the portable device (200) comprises a battery and a controller connected to the battery and to the graphical interface, wherein the controller is configured to send to the graphical interface (GI) a signal representative of the charge level of the battery of the portable device (200), which is configured to convert said signal emitted by the controller and provide a visual indication of said charge level. In a 173rd aspect according to the preceding aspect, the controller of the portable device (200) is configured to receive a signal from the control unit (50) representative of the type of protection device, wherein the controller is configured to send to the graphical interface (GI) a signal representative of the type of protection device, which is configured to convert said signal emitted by the controller and provide a visual indication to the user relating to the type of protection device.

In a 174th aspect according to any one of the two preceding aspects, the controller of the portable device is configured to send to the control unit (50) a command signal for the activation of the control unit (50) and of the at least one sensor directly connected to said control unit. In a 175th aspect according to any one of the preceding aspects, the portable device (200) comprises a smartphone comprising a controller connected to a memory containing a list of contacts of the user, wherein the controller is configured to:
- receive an alarm signal from the control unit (50) relating to the determination of a warning condition on the part of the user,
- following reception of the alarm signal, access a predetermined list of contacts stored in the memory of the portable device,
- automatically initiate a communication with a portable device of one or more of said contacts stored in the memory of the portable device.

In a 176th aspect according to any one of the preceding aspects, the protection device (1) is of the wearable type.

In a 177th aspect, a use of the protection device (1) in accordance with any one of the preceding aspects is provided for defining at least one of: an integral part of a garment wearable by a user, an integral part of an accessory for the protection of the neck of a user, a device couplable (fastenable or removably engageable) to a garment, a device couplable (fastenable or removably engageable) to a protection accessory for a user, a wearable accessory, a transport system (for example at least one of: a backpack, a bag).

In a 178th aspect, a garment (100) wearable by a user is provided, comprising at least one protection device (1) in accordance with any one of the preceding aspects. In a 179th aspect according to the preceding aspect, the garment (100) comprises at least one of: a jacket, a vest, a suit (optionally a motorcycle suit or a motorsport suit), technical sportswear.

In a 180th aspect according to any one of the two preceding aspects, the garment (100) comprises an outer layer and an inner layer, wherein the protection device (1) is engaged directly to the inner layer to define a part of an inner surface of the garment, or engaged between the inner layer and the outer layer of the garment.

In a 181st aspect according to the preceding aspect, the second covering (5) defines at least a part of an outer surface of the garment (100), optionally the first covering (4) defines at least a part of an inner surface of the garment. In a 182nd aspect according to any one of the four preceding aspects, the protection device (1) is fastened to the inner layer of the garment (100). In a 183rd aspect according to any one of the five preceding aspects, the protection device (1) is stitched to the inner layer of a garment, optionally to the outer layer.

In an aspect 183-bis a wearable system for the protection of a user is provided, the wearable system comprising:
- a wearable protection device (1) according to any one of the preceding claims,
- a portable device (200) electrically connected to the protection device (1) by a wired connection,
wherein the portable device (200) electrically powers the control unit (50) of the protection device (1).

In an aspect 183-ter according to the preceding aspect the portable device (200) is configured to emit at least one of: an acoustic alert signal, a visual signal or a vibration, when it detects the interruption of the wired connection with the control unit (50) of the protection device (1).

In a 184th aspect, a method of activation of a protection device in accordance with any one of the preceding aspects is provided. In a 185th aspect according to the preceding aspect, the method comprises the steps of:
- providing a protection device (1) in accordance with any one of the preceding aspects,
- engaging at least one pressurized gas container (C) with the activator (51),
- electrically connecting the control unit (50) of the protection device to a portable device (200) so that the latter can electrically power the control unit and the at least one sensor of the protection device.

In a 185bis aspect according to the preceding aspect, the method further comprises a step of sending by the portable device (200) a command signal to the control unit (50) for the activation of said control unit and said at least one sensor. In a 186th aspect according to the preceding aspect, the control unit (50) of the protection device, following reception of the command signal from the portable device (200), is configured to:
- receive at least one signal from the at least one sensor representative of a condition of the user,
- compare the received signal with at least one value of a safety parameter,
- determine, as a function of the comparison, the presence of a warning condition for the user and,
- if said warning condition is determined, send a command signal to the activator (51) to allow the piercing of the container (C) and thereby determine the inflated condition of the bladder (2).

In a 187th aspect according to any one of the aspects from the 184th, the portable device (200), following the electrical connection with the control unit (50), is configured to receive at least one signal from said unit representative of the type of protection device, wherein the method comprises the step of, following reception by the portable device (200) of at least one signal from said unit representative of the type of protection device, selecting by means of said portable device the desired protection device to allow data communication with the control unit (50). In a 188th aspect according to any one of the aspects from the 184th to the preceding aspect, the portable device (200) comprises at least one of: a smartphone, a tablet. In a 189th aspect according to any one of the aspects from the 184th to the preceding aspect, the step of connecting the portable device (200) to the control unit (50) is performed by cable, optionally via USB cable to manage the power supply with said control unit (50). In a 190th aspect according to any one of the aspects from the 184th to the preceding aspect, the step of connecting the portable device (200) to the control unit (50) is carried out by at least one of the following cables: USB-C, Micro-USB, Lightning, USB-A.

### BRIEF DESCRIPTION OF THE DRAWINGS

Some embodiments and some aspects of the present disclosure will be described hereinafter with reference to the accompanying drawings, provided for indicative purposes only and therefore non-limiting, in which:
- figures 1 and 2 are schematic views of a garment comprising a protection device in accordance with the present disclosure;
- figures 3 and 4 are perspective views of a protection device in accordance with the present disclosure;
- figure 5 is a schematic view of a protection device in accordance with the present disclosure;
- figure 6 is a side view showing the protection device of figures 3 and 4 worn by a user;
- figure 7 is a schematic view of the protection device carried by the garment of figures 1 and 2;
- figure 8 is a further schematic view showing, in detail, some components of the protection device in accordance with the present disclosure.

### DEFINITIONS AND CONVENTIONS

In the present detailed description, corresponding parts illustrated in the various figures are indicated with the same reference numerals. The figures may illustrate the subject matter of the present disclosure by means of representations not to scale; therefore, parts and components illustrated in the figures may relate exclusively to schematic representations.

The term "sheet material" means a structure having two dimensions (for example the length and the width) of dimensions strongly prevailing over a third dimension (the thickness). The sheet material extends in thickness between a first and a second main surface and may be single-layer or multi-layer.

For example, as will be better described below, the protection device 1 forming the subject matter of the present disclosure comprises at least one bladder 2, which may be made of sheet material. In particular, the bladder 2 may comprise at least one wall, optionally a first and a second wall, made of sheet material, adapted to essentially define a fluid-tight bag. In the case where the bladder 2 has a first and second wall, these are coupled to each other substantially in a fluid-tight manner to essentially define a bag.

The sheet material (or sheet) of the at least one wall, optionally of the first and second wall, of the bladder may be single-layer or multi-layer. In the case of a single-layer sheet, this may essentially comprise a plastic film, in particular made of material substantially impermeable to gases. In detail, the first and second wall may be of the heat-sealable type to allow the welding of said walls to each other; in particular, the first and second wall may be joined to each other by hot pressing, high-frequency welding or ultrasonic welding. In detail, the at least one wall, optionally the first and second wall, of the bladder may be made of polyurethane, PVC, EVA, polyethylene, polypropylene, silicone rubber, rubber or similar materials. The thickness of the individual plastic film may be comprised between 0.05 and 0.4 mm, optionally 0.1 and 0.25 mm.

The term "impermeable" means the capacity of a body or a material to prevent the passage of fluids. The wall, optionally the first and second wall, of the bladder 2 is substantially gas-impermeable, i.e. it does not allow a gas, for example air or nitrogen, to completely traverse the thickness of the sheet material.

In the present disclosure, the term "breathable" indicates the permeability of a body or material to a gas, for example air.

The protection device 1 may comprise/use at least one control unit 50 responsible for controlling operative conditions implemented by the same. The control unit may be a single unit or may be formed by a plurality of distinct control units depending on the design choices and operative requirements.

The term "control unit" means an electronic-type component, which may comprise at least one of: a digital processor (CPU), an analogue-type circuit, or a combination of one or more digital processors with one or more analogue-type circuits. The control unit may be "configured" or "programmed" to perform certain steps: this may be achieved in practice by any means that allows the control unit to be configured or programmed. For example, in the case of a control unit comprising one or more CPUs and one or more memories, one or more programs may be stored in appropriate memory banks connected to the CPU or CPUs; the program or programs contain instructions that, when executed by the CPU or CPUs, program or configure the control unit to perform the operations described in relation to the control unit. Alternatively, if the control unit is or comprises analogue-type circuitry, then the circuit of the control unit may be designed to include circuitry configured, in use, to process electrical signals so as to perform the steps relating to the control unit.

At least part of the operation of the described protection device may be performed by a data processing unit, or control unit, technically replaceable by one or more electronic processors designed to execute a portion of a software or firmware program loaded on a memory medium. Such software program may be written in any known programming language.

The data processing unit, or control unit, may be a general purpose processor configured to execute one or more steps of the operating method identified in the present disclosure through the software or firmware program, or may be an ASIC or dedicated processor or an FPGA, specifically programmed to perform at least part of the operations of the operating method.

The memory medium may be non-transitory and may be internal or external to the processor, or control unit, or data processing unit. The memory medium may also be physically divided into a plurality of portions.

The term "reverse wireless charging" means a technology of energy transfer based on electromagnetic induction, by means of which a portable device equipped with a battery, such as a smartphone or tablet, can act as a power supply source for other compatible devices positioned in proximity to its surface, transferring electrical energy in wireless mode.

### DETAILED DESCRIPTION

### Protection device

A wearable protection device, identified by reference numeral 1, is configured to protect a user's body from impacts, for example in the event of an accident. The protection device 1 may be employed in the sports field and may be inserted in or fastened to technical clothing, such as jackets, vests, suits for the motorcycling and motorsport sector. The protection device 1 may be insertable in and/or couplable to a garment or may be an integral part thereof. Furthermore, the protection device 1 may also define standalone protection elements, such as for example knee pads, back protectors, protections for the head, neck and chest.

The protection device 1 comprises a bladder 2 adapted, following the introduction of a pressurized gas, to inflate and define an impact-absorbing bag. The introduction of gas into the bladder 2 is performable by means of a container C containing pressurized gas, for example carbon dioxide. The container C is normally closed by a membrane, for example metallic, configured to be pierced, upon the occurrence of predetermined activation conditions, by an activator 51, to allow the release of gas from the container C and the consequent inflation of the bladder 2.

The activator 51 may comprise a housing 52 extending in length between a first and a second end 52a, 52b, along an extension direction. The housing 52 may comprise a hollow body defining therein a seat that extends along the extension direction. In particular, the housing 52 may comprise:
- at least one through access defined at the second end 52b, configured to receive at least a part of a pressurized gas container C, and
- at least one passage opening defined in the seat S and placing the seat in fluid communication with the through access.

By virtue of the presence of the through access, the housing 52 may be open at the second end 52b. In a non-limiting embodiment, the housing 52 may be entirely hollow and have an auxiliary access at the first end 52a, opposite to the through access and in fluid communication therewith. Alternatively, the internal cavity of the housing 52 may extend only for a preponderant portion of the housing 52 in the direction of the first end 52a, remaining closed towards the first end 52a.

In one example, the internal cavity of the housing 52 may be defined, proceeding from the second end 52b towards the first end 52a, by the through access, which is in direct fluid communication with the passage opening, which in turn communicates with the seat.

The housing 52 may have a substantially cylindrical structure. In such configuration, the outer and inner surfaces of the housing 52 have substantially a circular conformation. It is understood that different conformations of the housing 52 are possible.

The through access may also have a circular cross-section. The access is configured to allow the insertion of a head of the pressurized gas container C into the housing 52 so that, following the opening of the container C (opening which occurs at the head), the pressurized gas present in the container C can flow into the housing.

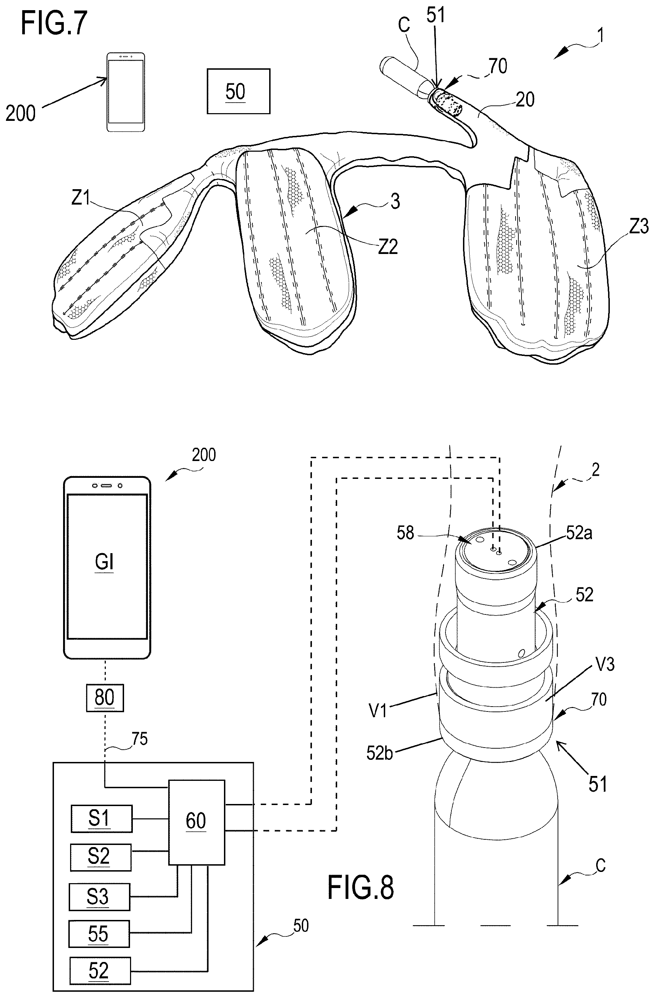

As visible in figure 8, the housing 52 has, at the second end 52b, an engagement portion V1 configured to allow the constraint of the housing 52 to a respective engagement portion of the pressurized gas container C. The engagement portion V1 of the housing 52 is defined at the through access and may comprise at least one of: an internal thread, an external thread, a bayonet system, a quick-release coupling.

In the housing 52, the passage opening may also be defined, which, together with the through access, defines the cavity of the housing 52. The passage opening may be adjacent to the access and, in particular to the engagement portion V1, along a direction connecting the second end 52b with the first end 52a of the housing 52.

The passage opening may be delimited by a perimeter edge with a closed profile, optionally having a circular shape. The passage opening may substantially constitute a continuation of the through access. Alternatively, the passage opening may have a reduced cross-section with respect to the through access, defining a narrowing adapted to constitute an end-stop for the container C.

As indicated above, the housing 52 internally defines the seat. In particular, the seat is adjacent to the passage opening in an opposite position with respect to the through access, the passage opening being interposed between the through access and the seat. The seat defines an internal portion of the housing 52 configured to receive a piercer 53 slidably mounted inside the seat. The seat may be delimited by an internal surface having, in a non-limiting manner, a substantially cylindrical conformation. In particular, the internal surface of the seat S, in cross-section along a plane orthogonal to the extension direction of the housing 52, may define a perimeter with a circular contour.

The activator 51 may further comprise an abutment 58 which may be arranged at least in part in the housing 52, longitudinally delimiting a part of the seat. The abutment 58 cooperates with the piercer 53 defining an end-stop for the piercer 53 itself. The abutment 58 may be made as a stop integrally joined to the internal surface of the housing 52 or as an insert engaged in the housing 52.

At least one of the housing 52 and the abutment 58 may comprise a cavity, for example of the blind, facing the piercer 53 and in fluid communication with the seat. Such cavity is configured to accommodate at least one pusher which is configured to act on the piercer 53 to move the latter inside the seat S, to allow the opening of the pressurized gas container C. For example, the pusher may comprise at least one pyrotechnic charge configured to be triggered by means of electrical energy, in particular electrical current.

The housing 52 and/or the abutment may comprise one or more passages in communication with said cavity and configured to place the cavity in fluid communication with the exterior of the housing. In one example, each passage may be configured to allow the wired connection of the pusher, for example of the pyrotechnic charge, with a control unit 50 configured to command the activation of the pusher.

In the embodiment illustrated in figure 8, the activator 51 comprises two passages, substantially formed in the abutment 58, each configured for the passage of a respective electrical cable. However, the possibility of providing a single passage adapted to allow the passage of two or more cables is not excluded.

The housing 52 may comprise at least one through opening 59 configured to place the seat in fluid communication with the environment external to the housing 52. The through opening 59 is formed at the passage opening of the housing 52 and, more precisely, is interposed between the passage opening and the first end 52a. In one example, the through opening 59 may be comprised between the passage opening and the abutment 58 to allow the outflow of gas which, exiting from the container C, passes through the passage opening. The position of the at least one through opening 59 placed in proximity to the passage opening allows the gas to rapidly exit from the housing 52 as soon as it has passed through the passage opening.

The housing 52 may comprise a hollow body having a lateral wall with a predetermined thickness and the aforesaid at least one through opening 59 may pass through the entire thickness of the lateral wall. In one example, each through opening 59 may be a hole. In a non-limiting embodiment, the housing 52 may comprise a plurality of through openings 59, for example in a number comprised between 2 and 12, optionally comprised between 4 and 10.

The activator 51 may further comprise a piercer 53 accommodated in the seat of the housing 52 and movable in the seat at least between a first operative position in which the piercer is spaced apart from the passage opening, and a second operative position in which at least a part of the piercer passes through said passage opening. The displacement of the piercer between the first and the second operative position allows the piercer to at least partly pass through the passage opening, reach the container C to determine the opening thereof and the consequent outflow of gas which propagates in the seat and exits from the housing 52 through the through opening.

The pressurized gas container C may be accommodated at least in part in the through access of the housing 52 so that, once the piercer has reached the second operative position, it can pierce a head of the container C and allow the gas to exit, entering the housing 52. The gas exiting from the container is related to the dimension of the passage generated on the container C as well as to the cross-section of the passage opening of the housing. The passage opening may have a dimension such as to allow an adequate stop for the piercer, preventing the latter from exiting from the access (for example in the event of accidental activation of the pyrotechnic charge, in the absence of the pressurized gas container C) and at the same time facilitating the rapid expulsion of gas into the seat.

In one example, during the movement of the piercer from the first to the second operative position generated by the pusher, in particular by the pyrotechnic charge, the piercer moves towards the passage opening. Following the reaching of the second operative position, the piercing of the part of the container C (for example, a head of a CO2 cartridge) placed inside the access is obtained with consequent outflow of gas from the container. The gas initially pushes on the piercer which is rapidly moved from the second to the first operative position with consequent outflow of gas from the at least one through opening 59 and therefore the outflow of gas from the housing 52.

The activator 51 usable for the protection device 1 may, in a non-limiting manner, be of the type in accordance with the activator described in Italian patent application no. 102024000028185, from page 17, line 6, to page 26, line 9.

The protection device 1 may further comprise, in a non-limiting manner, at least one pressurized gas container C, for example carbon dioxide, configured to be engaged with the activator 51. In one example, the protection device 1 may comprise one or more pressurized gas containers C. It is also possible to provide a configuration in which the protection device 1 is supplied without the container C, which may be associated with the protection device 1 as a separate component.

The container C may comprise a receptacle from which protrudes a head configured to be inserted in and coupled to the activator 51. The container C may therefore be made as a pressurized gas cartridge, for example a CO₂ cartridge, at least partially engageable in the housing 52 of the activator 51.

The container C may further comprise an engagement portion, for example at the head, configured to allow the reversible constraint of the container C to the housing 52. By way of example, the engagement portion may comprise an external thread configured for screwing onto a corresponding internal thread of the housing 52, defined at the through access. The conformation of the housing 52 therefore allows the insertion and positioning of the head of the container C inside the through access.

The head of the container C may comprise an opening arranged to allow the delivery of the pressurized gas and normally closed by a membrane, for example metallic, placed in a sealing manner at the opening itself. The piercer 53, during the transition from the first to the second operative position, is configured to contact the membrane and pierce/rupture it, so as to allow the outflow of gas from the container C.

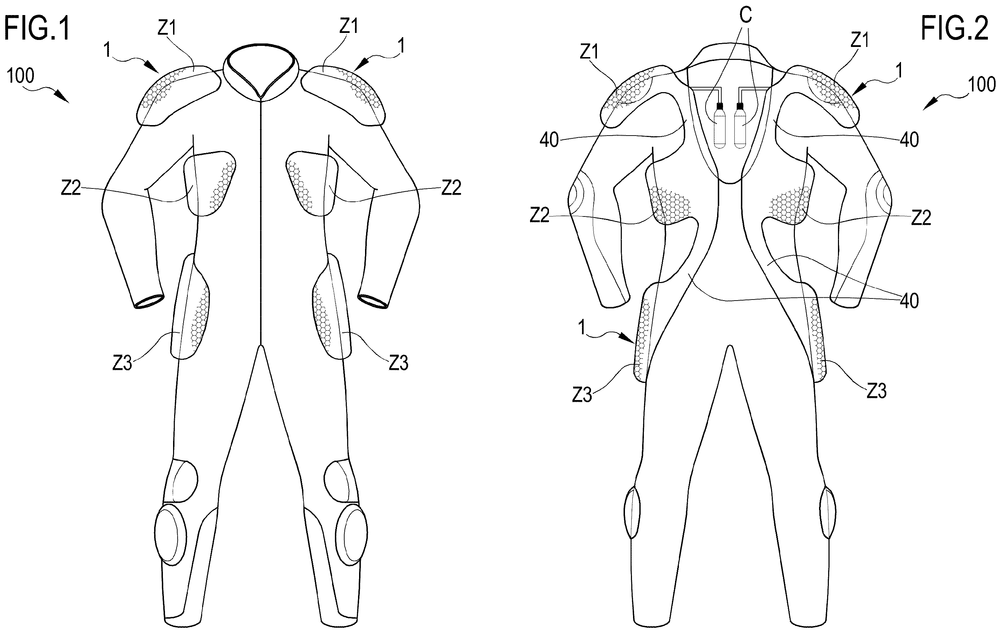

The protection device 1 comprises at least one bladder 2 engaged with the activator 51 and configurable between a deflated condition and an inflated condition. The bladder 2 may comprise at least one manifold 40 engageable with the housing 52 of the activator 51 to receive a gas flow coming from the pressurized gas container C and conveyed through the activator 51. In one example, the bladder 2 may comprise:
- at least one protection zone (see for example the zones Z1, Z2, Z3 illustrated in figures 1, 2 and 7) configured to define the part of the bladder 2 adapted to protect a user from impacts,
- at least one manifold 40 integrally joined to the protection zone.

The manifold 40 may be integrally joined to the protection zone and is in direct fluid communication therewith, so that the protection zone and the manifold 40 define a single internal volume of the bladder 2.

Where a plurality of protection zones are present, they may be mutually joined and/or placed in fluid communication by means of one or more dedicated manifolds, as for example illustrated in figures 1, 2 and 5.

At least one manifold 40 of the bladder 2 is engageable with the activator 51 to receive the gas flow emitted from the container C and allow the transition of the bladder 2 from the deflated condition to the inflated condition. As schematized in figures 7 and 8, a part of the housing 52 extending from the first end 52a up to the at least one through opening 59 is arranged in the bladder 2, in particular in the manifold 40. To this end, the housing 52 may comprise a coupling portion V3 arranged between the second end 52b and the at least one through opening 59, configured to allow the engagement of the housing 52 with the bladder 2, in particular with the manifold 40. The coupling portion V3 may comprise at least one of: an external thread, a bayonet system, a quick-release coupling.

The engagement portion of the housing 52, configured for the constraint with the container C, may be defined inside the housing 52, while the coupling portion V3 may be defined externally to the housing 52, in an opposite position with respect to the engagement portion of the same housing. In an example, the engagement portion of the housing 52 comprises an internal thread opposite to an external thread defined by the coupling portion V3 of the same housing. In this way, the engagement portion can allow the engagement of the container C in the housing, while the coupling portion V3 can allow the engagement of the housing 52 inside the bladder 2.

The bladder 2 may be directly engaged with the housing 52 by threaded portions or by welding and/or bonding. Alternatively, the protection device 1 may comprise a connector 70 (figure 8) configured to connect and place in fluid communication the bladder 2 with the internal volume of the housing 52. The connector 70 is constrained, on one side, to the coupling portion V3 of the housing 52 and, on the other side, is engaged inside the manifold 40 of the bladder 2. The connector 70 may define an intermediate component stably fastened to the bladder 2, for example, by welding and/or bonding and may have a respective engagement portion, for example an internal thread, configured to allow a quick and reversible engagement of the bladder 2 with the housing 52. The connector 70 may comprise a hollow body, for example cylindrical, having an outer surface engageable with the manifold 40 and an engagement portion, defined inside the hollow body.

When present, the connector 70 is configured to define, in cooperation with the housing 52, an interspace facing the at least one through opening 59 of the housing and directly in fluid communication with the internal volume of the bladder 2. In fact, following the opening of the container, the gas is configured to pass through the passage opening to enter the seat and exit from the housing 52 by means of the at least one through opening 59. The gas then reaches the interspace and then fills the bladder 2.

The bladder 2 may comprise at least one wall made of sheet material delimiting an internal volume of the bladder 2 and having a first and a second portion facing each other. The bladder 2 is configurable between:
- a deflated condition in which the first and second portion of the at least one wall, for a preponderant part of their own surface extension, are juxtaposed and at least partly in contact with each other,
- an inflated condition, in which the first and second portion of the at least one wall, for a preponderant part of their own surface extension, are spaced apart.

The bladder 2, in the inflated condition, defines an internal volume greater than the internal volume defined by the same when arranged in the deflated condition. For example, the protection device 1 may comprise a bladder 2 in accordance with that described in Italian patent application no. 102024000009331, also in relation to the bladder 2 (see for example the description of Italian patent application no. 102024000009331 from page 18, line 23, to page 24, line 24). Alternatively, the protection device 1 may comprise a bladder 2 in accordance with that described in Italian patent application no. 102024000014881 in relation to the bladder 2 (see for example the description of Italian patent application no. 102024000014881 from page 18, line 23, to page 21, line 27).

The bladder 2 may be accommodated in and at least partly engaged with at least one covering 3 of the protection device 1. The at least one covering 3 may define a compartment V in which at least part of the bladder is accommodated. The covering 3 is made of deformable material, for example of one or more of the following materials: polyester, nylon, cotton. In one example, the covering 3 is made of an elastic material having a stiffness greater than the material constituting the bladder 2.

The covering 3 is configured to assume a relaxed configuration or a taut configuration as a function of the stresses applied to the material, variable as a function of the condition of the bladder 2. For example, when the bladder 2 is in the deflated condition, the covering 3 is in a substantially non-taut condition; when the bladder 2 is in the inflated condition, the covering 3 is instead under tension.

The covering 3 may be made at least in part, optionally entirely, of gas-permeable sheet material. In particular, the permeability to gases may depend on the material itself and/or on the structure of the covering 3. For example, the covering 3 may be made of woven material which, by its own structural nature, is breathable; and/or may have a perforated structure. In other words, the gas permeability may be obtained by the choice of the material and/or by the presence of openings passing through the thickness of the sheet adapted to allow the passage of gas. The thickness of the sheet material constituting the covering 3 may be comprised between 0.1 mm and 30 mm, optionally between 0.5 mm and 15 mm.

In one embodiment, the at least one covering 3 comprises a first covering 4 and a second covering 5, both made of sheet material and at least partly facing each other, so as to delimit, between them, the compartment V configured to accommodate the bladder 2. The first and the second covering 4, 5 may have peripheral portions fastened to each other, for example by stitching, to substantially define an at least partially closed bag. In a variant, the fastening may be carried out substantially along the entire extension of the peripheral portion, defining a substantially closed bag. The type of joint between the first and second covering 4, 5 may depend on the material employed; for example, where a woven material is employed, the fastening may be carried out by stitching. However, the possibility of joining the coverings 4, 5 by bonding and/or by heat sealing is not excluded.

The first and the second covering 4, 5 may be in contact with each other at the peripheral portion. For a preponderant part of their surface extension (optionally at least 95% of the respective surface extension), the first and the second covering 4, 5 are spaced apart from each other, optionally by interposition of the bladder 2.

The material of the covering 3, optionally of the first and the second covering 4, 5 has a limited elastic deformation capacity. For example, the first and the second covering 4, 5 may have an elongation percentage lower than 100%, optionally lower than 50%. By way of example, the first covering 4 may be made of perforated woven material, for example of polyester, while the second covering 5 may be made of woven material, for example of nylon (optionally non-perforated), which may in turn be perforated, for example to promote the passage of air.

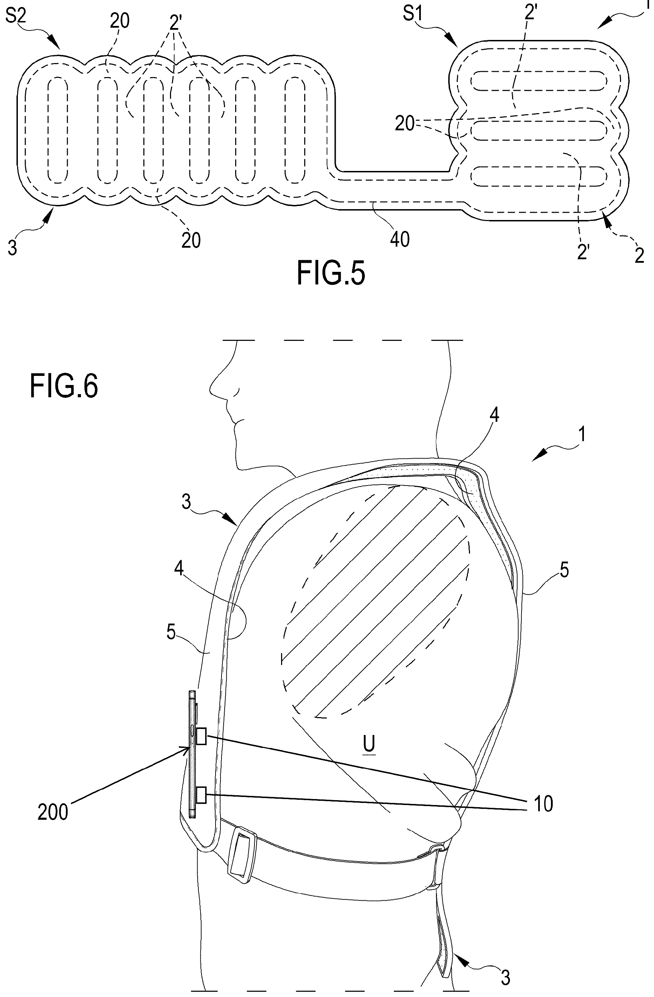

The covering 3 has, in the deflated condition of the bladder 2, a surface extension substantially equal to the surface extension of the covering 3 when the bladder 2 is in the inflated condition. Since the first and the second covering 4, 5 are made of substantially non-elastic material, during the transition of the bladder 2 from the deflated condition to the inflated condition they do not appreciably increase their own surface extension, being instead configured to contain and guide the deformation of the bladder 2. By virtue of the aforesaid non-elastic nature, the covering 3, when the bladder 2 is in the deflated condition and the covering 3 is laid flat on an ideal plane, has a substantially slab-like shape, as for example visible in figure 6. In such condition, the covering 3 is delimited by an outer perimeter edge that defines a first area. The outer perimeter edge, in the inflated condition of the bladder 2 and with the covering 3 substantially laid flat on an ideal plane, defines a second area. The ratio between the second area and the first area is equal to or less than 1, optionally comprised between 0.9 and 1. Consequently, during the transition of the bladder 2 from the deflated condition to the inflated condition, the covering 3 is configured to predominantly, and preferably solely, vary its own thickness.

The first and the second covering 4, 5 have a maximum distance that identifies a thickness (or height) of the covering 3. In the deflated condition of the bladder 2, said height/thickness is less than 3 cm, optionally comprised between 0.1 cm and 2 cm. In the inflated condition of the bladder 2, the first and the second covering 4, 5 have a greater maximum mutual distance, defining a height/thickness of the covering 3 greater than that in the deflated condition. In particular, the ratio between the height/thickness of the covering 3 in the inflated condition and the height/thickness of the covering 3 in the deflated condition is equal to or greater than 5, optionally comprised between 6 and 20. In a further example, the height/thickness of the covering 3 in the inflated condition is greater than 3 cm, optionally comprised between 4 cm and 20 cm.

As regards the bladder 2, it may comprise a plurality of side-by-side segments 2', each extending along a respective extension trajectory (see, for example, figure 5). Two immediately adjacent segments may have substantially the same length, measured along the respective extension trajectories. The bladder 2 may comprise a number of segments 2' equal to or greater than 2, optionally comprised between 2 and 20 (inclusive). The bladder 2 is substantially entirely accommodated in the compartment V, in particular interposed between the first and the second covering 4, 5.

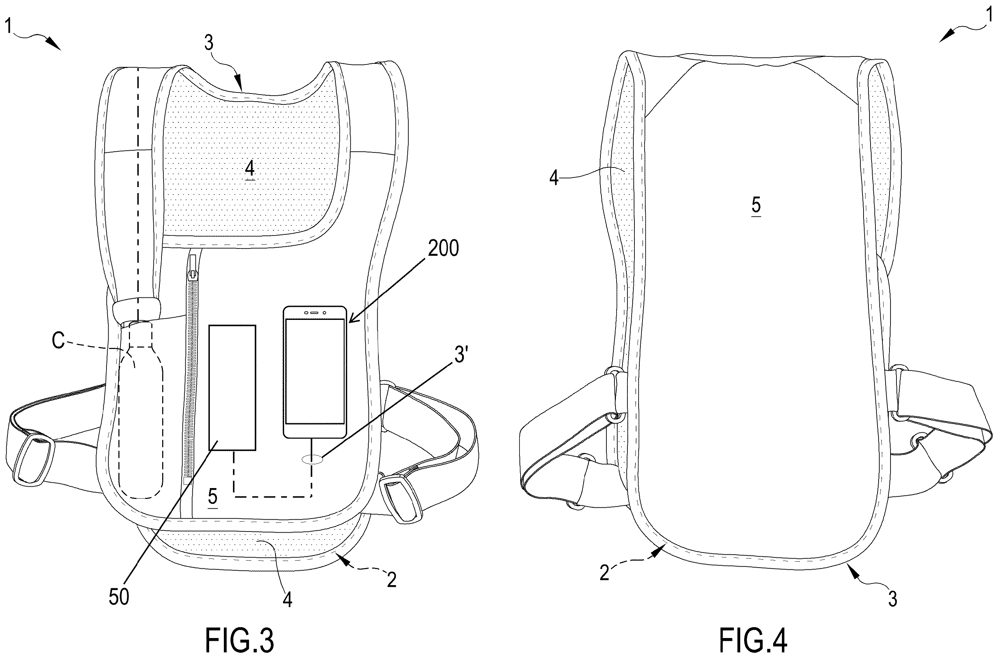

The segments 2' may all be side-by-side to each other to substantially define a single group of segments. Alternatively, as illustrated in figure 5, the bladder 2 may comprise at least a first series of segments, comprising two or more side-by-side segments, and a second series of segments, comprising two or more side-by-side segments. In figure 5 there is shown, by way of example, a bladder 2 having two series of segments: a first series defining a back protection (see figure 4) and a second series defining a chest protection. The two series are placed in fluid communication with each other by means of a manifold 40 which may be, for example, in fluid communication with a connecting section 20 of the two series. In figures 1 and 2 there is instead illustrated, in a non-limiting manner, a protection device 1 comprising three series of segments configured to protect the zones Z1, Z2 and Z3 of a user, as schematized on the garment 100. Also in such configuration, two manifolds 40 are configured to place in fluid communication the connecting sections of the various series.

The segments 2' may be side-by-side to each other, but may be arranged, at least in the deflated condition, spaced apart from each other. The bladder 2 therefore comprises at least one connecting section 20, also accommodated in the compartment V, configured to place in fluid communication the plurality of side-by-side segments 2'. In one embodiment, the plurality of segments 2' emerge from a same side of the connecting section 20. Alternatively, the bladder 2 may comprise a first and a second connecting section 20 opposite to each other with respect to the plurality of segments 2'. In such configuration, the first and the second connecting section 20 are connected and placed in fluid communication by the plurality of segments 2', overall defining a "ladder" conformation (see figure 5).

The bladder 2 is made of deformable sheet material, for example comprising at least one of: polyurethane, PVC, EVA, polyethylene, polypropylene, silicone rubber, rubber. The bladder 2 is configured to assume a taut configuration as a function of the stresses applied to the material. In particular, the bladder 2 is elastically deformable: during the transition from the deflated condition to the inflated condition, the bladder 2 (in particular each segment 2') is configured to deform elastically. For example, the material of the bladder 2 has an elongation percentage greater than that of the material of the covering 3, for example greater than 100%, optionally greater than 300%.

The bladder 2 further has a substantially gas-impermeable structure, such as to allow the transition from the deflated condition (relaxed condition) to the inflated condition, in which the sheet material of the bladder 2 is substantially stretched (under tension). The sheet material of the bladder 2 may be, for example, a single-layer gas-impermeable and deformable plastic film.

As mentioned, the bladder 2 may comprise the plurality of segments 2', each of which comprises at least one wall made of sheet material delimiting an internal volume and having a first portion and a second portion facing each other. The bladder 2 (and, in particular, each segment 2') is configurable between:
- a deflated condition, in which the first and the second portion of the aforesaid at least one wall, for a preponderant part of the respective surface extension, are juxtaposed and at least partly in contact with each other; and
- an inflated condition, in which the first and the second portion of the aforesaid at least one wall, for a preponderant part of the respective surface extension, are spaced apart.

Each segment 2', in the inflated condition, defines an internal volume greater than the internal volume defined in the deflated condition.

In a cross-section along a plane orthogonal to the extension trajectory of the respective segment 2' and at the peripheral engagement portion, the at least one wall of each segment substantially defines a closed perimeter edge having a predetermined length. Said length of the closed perimeter edge, in the deflated condition of the bladder 2, may be comprised between 100 mm and 600 mm, optionally between 110 mm and 170 mm. The length of the closed perimeter edge, in the inflated condition, may be comprised between 100 mm and 1200 mm, optionally between 150 mm and 350 mm.

The first and the second covering 4, 5, both in the deflated condition and in the inflated condition, are kept mutually spaced apart, for a preponderant part of their surface extension (for example at least for 70%, optionally at least for 80%), by interposition of the plurality of segments 2'.

Also the connecting section 20 comprises at least one wall made of sheet material delimiting an internal volume in fluid communication with the internal volume of a plurality of segments 2'. The connecting section 20 has a respective first portion and a respective second portion facing each other, joined by one or more peripheral engagement portions. The connecting section 20 is therefore configurable between:
- a deflated condition, in which the first and the second portion of the aforesaid at least one wall, for a preponderant part of the respective surface extension, are juxtaposed and at least partly in contact with each other; and
- an inflated condition, in which the first and the second portion of the aforesaid at least one wall, for a preponderant part of the respective surface extension, are spaced apart, and in which the aforesaid at least one wall defines an internal volume greater than that defined in the deflated condition.

The bladder 2 may be at least partly counter-shaped to the internal surface that delimits the compartment V of the covering 3. In particular, in the deflated condition the bladder 2 is configured to occupy substantially the entire compartment V of the covering 3. In the inflated condition, the bladder 2 is configured to occupy a preponderant part of the internal volume of the covering 3. In one example, in the inflated condition the bladder 2 occupies a predetermined volume and the ratio between the internal volume defined by the covering 3 (in the inflated condition of the bladder 2) and the predetermined volume occupied by the bladder 2 is less than 1, optionally comprised between 0.8 and 0.97, even more optionally between 0.9 and 0.96.

The bladder 2, in particular one or more segments 2', may comprise one or more peripheral engagement portions fastenable to, or in proximity to, at least one of the first and the second covering 4, 5, for example by stitching. By way of example, each segment 2' may comprise at least two peripheral engagement portions opposite to each other with respect to the internal volume of the segment. A peripheral engagement portion of a first segment may face a peripheral engagement portion of an adjacent second segment, so that adjacent segments have directly facing peripheral engagement portions.

Each segment 2' may be fastened to the first and/or to the second covering 4, 5 exclusively at the aforesaid peripheral engagement portions, which may be defined by welded portions of the plastic film that do not delimit the inflatable internal volume. It follows that a stitch made at such portions does not determine the puncturing of the bag, thereby allowing the transition of the bladder 2 from the deflated condition to the inflated condition. The constraint of the segments 2' to the covering 3 in such zones allows a correct positioning of the bladder 2 and facilitates the deformation thereof inside the covering 3. In one embodiment, each segment 2' is fastened, along a part of its own peripheral edge, to the first covering 4 and/or to the second covering 5, optionally in a zone spaced apart from the peripheral portion of the covering 3.

The covering 3 may further comprise at least one pocket, internal or external, configured to accommodate at least one pressurized gas container C. In figure 2 there is illustrated, in a non-limiting manner, a suit provided with a pocket in which two containers C are accommodated; which may be openable from the inside and/or from the outside of the suit, so as to allow the replacement of the container C after activation. In figure 3 there is instead illustrated, in a non-limiting manner, a protection device 1 made as a wearable vest, in which an outer layer is substantially defined by the second covering 5 (while the first covering 4 defines an inner layer), and on the second covering 5 a pocket is formed, configured to accommodate at least one pressurized gas container C.

The protection device 1 comprises a control unit 50 accommodated in the at least one covering 3, for example between the first and the second covering 4, 5. Alternatively, the control unit 50 may be accommodated in a pocket formed on at least one of the first and the second covering 4, 5. The control unit 50 is connected to the activator 51 and is configured to send a command signal to the activator 51 to allow the piercing of the container C and the delivery of the pressurized gas.

The control unit 50 is configured to:
- receive at least one signal representative of a condition of the user,
- compare the received signal with at least one value of a safety parameter,
- determine, as a function of the comparison, the presence of a warning condition for the user and,
- if said warning condition is determined, send a command signal to the activator 51 to allow the piercing of the container C and thereby determine the inflated condition of the bladder 2.

The signal representative of the condition of the user may be generated by at least one sensor that may be integrated in the protection device 1 and/or in the control unit 50, or may be a distinct sensor, electrically connected to the control unit 50.

By way of example and not limitation, in figure 5 there is illustrated a control unit 50 that integrates at least one sensor, for example at least one of: an accelerometer S1, a gyroscope S2 and a GPS module S3. However, the possibility of providing only one of said sensors and/or of integrating different sensors, such as, for example, a barometer, a light sensor, a camera, is not excluded. In such configuration, the control unit 50 may comprise a processor 60 connected to each of said sensors.

In a variant, the at least one sensor may be part of the protection device 1 but may be separate from the control unit 50 (i.e. not integrated therein). Said sensor is configured to emit a signal representative of a condition of the user. Consequently, the control unit 50 is configured to:
- receive the signal from the at least one sensor,
- compare the signal received from the sensor with at least one value of a safety parameter,
- determine, as a function of the comparison, the presence of a warning condition for the user and,
- in the event of determination of the warning condition, send a command signal to the activator 51 to allow the piercing of the container C and the inflation of the bladder 2.

The control unit 50 is active in command on the pusher of the activator 51, which is configured to receive the command signal from the control unit 50 and, following reception of said signal, act on the piercer 53 to move the latter from the first to the second operative position. In particular, following the determination of the warning condition, the control unit 50 is configured to send the command signal directly to the pyrotechnic charge, determining the triggering thereof and the consequent movement of the piercer 53. The control unit 50, and optionally the at least one sensor, is arranged externally to the bladder 2 and is connected to the activator 51 by at least one cable, optionally by a pair of electrical cables. Said at least one cable extends from the activator 51, passes through the bladder 2 and exits at the manifold 40. The cable then reaches the control unit 50, which is external to the bladder 2, but may be accommodated and/or engaged inside the at least one covering 3.

The control unit 50 is configured to receive electrical energy to be electrically powered from at least one portable device 200 connected to the control unit 50. In this way, the electrical power supply of the control unit 50 of the protection device 1 is delegated to the portable device 200 which acts as a power supply source for the entire electronic system of the protection device 1.

The protection device 1 is devoid of a primary power supply source integrated in the protection device 1 or integrated in the control unit 50. In other words, the protection device 1 does not incorporate a battery or other dedicated energy source for the operation of the control unit 50 and of the related sensor system. The energy necessary for the operation of the control unit 50 and of the related electronic components is entirely supplied by the external portable device 200. Such configuration allows a significant reduction in the weight and bulk of the protection device 1, eliminating the need for an integrated battery and the related charge management circuitry, as well as the need to periodically recharge a dedicated battery of the protection device 1.

The portable device 200 may comprise at least one of: a smartphone, a tablet, a portable battery. In particular, the portable device 200 is a device that the user normally carries during sports activity or everyday use, and which has its own internal battery from which the control unit 50 can draw the energy necessary for its own operation.

The control unit 50 is configured to be powered by a voltage comprised between 3.5 and 5 Volt, optionally substantially equal to 5 Volt. Such voltage range corresponds to the voltage delivered by USB ports of commercially available portable devices, such as smartphones, tablets and portable batteries. In this way, the control unit 50 can be powered directly by the output voltage of the portable device 200 without the need for any voltage conversion.

In fact, the control unit 50 may be devoid of an input voltage converter, optionally of the DC-DC type, configured to reduce the voltage received from the portable device 200 to 5 Volt. In other words, the control unit 50 is devoid of circuitry dedicated to the conversion, optionally to the step-down, of an input voltage signal to the same control unit. This means that the voltage supplied by the portable device 200 is used directly by the control unit 50 and by the electronic components connected thereto, without interposition of voltage conversion stages. Such feature considerably simplifies the circuit architecture of the control unit 50, reducing its dimensions, cost and potential sources of failure.

The control unit 50 is connectable to the at least one portable device 200 by a cable 75. In particular, the control unit 50, via the cable 75, is configured to receive exclusively electrical energy for its own power supply, without data transfer. In other words, the cable connection between the control unit 50 and the portable device 200 is intended solely for the supply of electrical energy for powering the control unit 50, while the data communication between the portable device 200 and the control unit 50 takes place via a separate communication channel, namely a wireless communication channel as described below.

In one example, the control unit 50 is configured to electrically connect to the at least one portable device 200 by USB-C cable. The type of connection described above allows the on-the-go (OTG) technology to be exploited for powering the control unit 50 and the at least one sensor. In particular, the OTG technology allows the portable device to function as a USB host. The portable device 200, via OTG technology, can control other USB devices connected thereto: the USB host manages the power supply between the devices.

The electrical power supply received from the portable device 200 may be entirely managed by the control unit 50, which is configured to manage the power supply of the at least one sensor, also configured to receive an electrical power supply having a voltage comprised between 3.5 and 5 Volt, optionally substantially equal to 5 Volt.

The cable 75 connecting the control unit 50 of the protection device 1 with the portable device 200 comprises a light indicator 80, optionally an LED, integrated in the cable 75 or arranged at one end thereof, to be easily visible by the user during use of the protection device 1.

The control unit 50 is connected to the light indicator 80 and is configured to command the emission of one or more light signals representative of at least one of the following operative conditions: presence of electrical power supply between the control unit 50 and the portable device 200, and insufficient charge state of a battery of the portable device 200.

The control unit 50 is configured to vary at least one of: light intensity, color and flashing frequency of the light indicator 80 as a function of the operative condition. For example, the light indicator 80 may emit a steady green light when the power supply is present and the charge level of the portable device 200 is sufficient, a flashing orange light when the charge level is decreasing, and a flashing red light at high frequency when the charge level of the portable device 200 is insufficient. In this way, the user can verify the operative state of the protection device 1 with a simple glance at the light indicator 80, without the need to consult the portable device 200.

The control unit 50 is configured to be uninterruptedly powered by the portable device 200 for the entire duration of use of the protection device 1. In other words, from the moment the user activates the protection device 1 by connecting the portable device 200 to the control unit 50, the latter receives electrical energy continuously and without interruptions until the protection device 1 is deactivated or the connection with the portable device 200 is interrupted. Such uninterrupted power supply ensures that the control unit 50 and the at least one sensor are constantly operative and ready to detect any warning conditions during the entire period of use of the protection device 1.

The portable device 200 is removably engaged with the control unit 50 of the protection device 1. In other words, the portable device 200 is configured to be mechanically associated with the protection device 1 in a reversible manner, i.e. to be connected to and disconnected from the control unit 50 in an easy and quick manner by the user. Such removable engagement allows the user to use their own portable device 200 also separately from the protection device 1 when the latter is not in use.

The portable device 200 may be arranged outside the compartment of the at least one covering 3. In such configuration, the at least one covering 3 may comprise a through opening (figure 3) configured to allow the electrical connection of the portable device 200 to the control unit 50, optionally by cable, which, as mentioned above, may be accommodated inside the at least one covering 3. Furthermore, the protection device 1 may comprise at least one support 10 (figure 3) configured to engage and support at least one portable device 200. In one example, the support 10 is constrained to the inner and/or outer covering 4, 5, or may define a pocket of said coverings.

The portable device 200 may be, in a non-limiting manner, part of the protection device 1. Alternatively, the protection device 1 may exclusively comprise the control unit 50, the activator 51, the bladder 2, optionally the covering 3, the at least one sensor, and be configured to receive the power supply from one or more portable devices 200 separate from the protection device 1.

The control unit 50 may comprise or may be connected to a wireless communication module 55 of the protection device 1, for the exchange of data with the portable device 200. Such wireless communication module 55 is configured to exclusively exchange data with the portable device 200, without transfer of electrical energy intended for the power supply of the control unit 50. In other words, the function of the wireless communication module 55 is exclusively that of allowing the transmission and reception of information, commands and signals between the portable device 200 and the control unit 50, while the electrical power supply of the control unit 50 is supplied exclusively via the wired connection described above.

The wireless communication module 55 comprises at least one of a Bluetooth module, WiFi and NFC. In one example, the wireless communication module 55 comprises a Bluetooth module that allows low-energy data communication between the control unit 50 and the portable device 200.

The separation between the power supply channel (wired) and the data communication channel (wireless) allows each channel to be optimized for its own specific function. The cable 75 provides a stable and continuous connection for the electrical power supply, while the wireless module 55 allows the exchange of data without additional cabling constraints. Bluetooth and WiFi allow communication with the part of the electronic module equipped with sensors for the protection device 1.

The protection device 1 or in particular the control unit, may comprise a GPS module S3 configured to generate a positioning signal representative of a travel speed of the user. The GPS module S3 allows the determination of the speed at which the user is moving in real time, and such information is employed by the control unit 50 as an additional parameter for the control of the activation of the activator 51.

In an example, the control unit 50 is further configured to receive the positioning signal from the GPS module S3, compare said positioning signal with a threshold speed value, optionally greater than 5 km/h, even more optionally comprised between 5 km/h and 15 km/h, and allow the sending of an activation command to the activator 51 when the positioning signal is indicative of a travel speed equal to or greater than the threshold speed value.

Such speed-based control functionality based on the travel speed of the user allows accidental activations of the activator 51 to be avoided when the user is stationary or moving at low speed, for example when seated, walking normally, or putting on or storing the protection device 1. In fact, the comparison with the threshold speed value constitutes a necessary enabling condition for sending the activation command to the activator 51: only when the travel speed of the user equals or exceeds the threshold speed value, the control unit 50 is enabled to send the activation command to the activator 51 if a warning condition is simultaneously detected.

The control unit 50 may also be configured to receive a travel speed signal generated by the portable device 200, optionally by a GPS module of the portable device. In this way, the control unit 50 has two independent sources of information on the travel speed of the user: the GPS module S3 of the protection device 1 and the GPS module of the portable device 200.

The control unit 50 may be configured to compare the travel speed signal received from the portable device 200 with the threshold speed value, and allow the sending of an activation command to the activator 51 when both the positioning signal from the GPS module S3 of the protection device 1 and the travel speed signal from the portable device 200 are equal to or greater than the threshold speed value.

Such dual verification of the travel speed increases the reliability of the control system, further reducing the probability of accidental activations due to malfunction or imprecision of a single GPS module. The control unit 50 allows the sending of the activation command to the activator 51 only when both speed signals confirm that the user is effectively moving at a speed equal to or greater than the threshold value.

The control unit 50, if it detects the absence or interruption of the positioning signal from the GPS module S3, is configured to emit an alarm signal. Such alarm signal comprises a light signal, optionally emitted via the light indicator 80, and/or a warning signal on the portable device 200 comprising at least one of an acoustic signal and a vibration. Such alarm functionality allows the user to be promptly informed of the lack or interruption of the GPS signal of the protection device 1, a condition that could compromise the correct operation of the threshold speed control system described above. The user, once warned, can verify the correct positioning of the protection device 1, the GPS signal reception or adopt appropriate precautions.

In an example, if the control unit 50 detects the absence or interruption of the positioning signal from the GPS module S3 of the protection device 1, the control unit 50 may be configured to exclusively use the travel speed signal received from the portable device 200, optionally from the GPS module of the portable device 200, as the sole reference signal for the determination of the travel speed of the user. In such configuration, the control unit 50 is configured to compare the travel speed signal from the portable device 200 with the threshold speed value and allow the sending of an activation command to the activator 51 when said travel speed signal is equal to or greater than the threshold speed value. The GPS signal of the portable device 200 acts as a backup source for the determination of the speed of the user, ensuring the operational continuity of the threshold speed control system even in the event of malfunction or temporary unavailability of the GPS module S3 of the protection device 1. In this way, the protection device 1 maintains the ability to discriminate between active use conditions, in which the activation of the activator 51 is allowed, and conditions of inactivity or low speed, in which the activation of the activator 51 remains inhibited, even in the absence of the signal from the GPS module S3 integrated in the protection device 1.

The control unit 50 may also comprise a memory 52 in which personal data relating to the user of the protection device 1 are stored. In one example, said personal data comprise at least one of: age, weight, height, physical conditions of the user. The personal data may be entered by the user themselves via the portable device 200, for example by means of a dedicated software application, and transmitted to the control unit 50 for storage in the memory 52.

The control unit 50 is configured to select an activation algorithm from a plurality of activation algorithms stored in the memory 52 as a function of said personal data. In other words, the activation criteria of the activator 51 may be customized as a function of the physical and personal characteristics of the user, so as to optimize the sensitivity and reactivity of the protection system for each user.

Each activation algorithm defines evaluation criteria for signals generated by sensors of the protection device, for example said sensors comprising one or more accelerometers or gyroscopes, on the basis of which the activator 51 is commanded. For example, a user of larger build and greater weight may require different activation thresholds compared to a user of slighter build and lower weight, since the forces and accelerations generated during an accident may differ significantly as a function of the physical characteristics of the user. Similarly, the physical conditions of the user, such as for example the presence of particular pathologies or fragilities, may influence the selection of the most appropriate activation algorithm.

The control unit 50 of the protection device 1 may be configured to receive a signal representative of a charge state of a battery of the portable device 200. Since the portable device 200 constitutes the sole power supply source of the control unit 50, the monitoring of the charge state of the battery of the portable device 200 ensures the correct and uninterrupted operation of the protection device 1. The control unit 50 may be configured to compare a value of the charge state signal with a threshold charge value, optionally comprised between 5% and 25% of a total charge of the battery. Such threshold charge value represents the minimum charge level below which the operation of the protection device 1 could be compromised due to insufficient electrical power supply.

The control unit 50 is configured to command the emission of at least one alarm signal when the value of the charge state signal is lower than the threshold charge value. Said alarm signal comprises at least one of: a light signal, optionally emitted by the light indicator 80 of the protection device 1, an acoustic signal emitted by the portable device 200, and a vibration generated by the portable device 200. In this way, the user is promptly warned of the need to recharge the portable device 200 or to replace it with a portable device having a sufficient charge level, in order to ensure the continuity of the protection offered by the protection device 1.

In general, the control unit 50 may be configured to receive from the portable device 200 a signal also representative of a condition of the user. For example, the portable device 200 comprises at least one sensor configured to emit a signal representative of a condition of the user. The at least one sensor of the portable device 200 may comprise at least one of: a gyroscope, an accelerometer, a GPS, a barometer, a camera, a light sensor.

The control unit 50 may therefore be further configured to receive the signal from the at least one sensor of the protection device 1 directly connected to the control unit 50, receive the signal from the at least one sensor of the portable device 200, compare the signals received from the sensors with at least one value of a safety parameter, determine, as a function of the comparison, the presence of a warning condition for the user and, if said warning condition is determined, send a command signal to the activator 51 to allow the piercing of the container C and thereby determine the inflated condition of the bladder 2.

The control unit 50 may be configured to integrate the signal of the at least one sensor of the protection device 1 itself and further the additional signal of the portable device 200 for the identification of a condition of the user. For example, the accelerometer and gyroscope data of the portable device 200 may be used as additional information to the gyroscope and accelerometer data of the protection device for a better identification of the various conditions of the user. The GPS of the portable device 200 may be configured to obtain data on the position of the user. The barometer, if present in the portable device 200, may be employed to detect atmospheric pressure variations correlated to variations in altitude of the user above ground. In particular, a fall of the user determines a rapid variation in altitude which translates into a corresponding sudden variation of the atmospheric pressure signal detected by the barometer. The control unit 50 may be configured to monitor the signal from the barometer and to detect anomalous variations of said signal, indicative of an abrupt variation in altitude of the user. The control unit 50 may be configured to employ the barometric signal as an additional signal for the determination of a warning condition of the user, in combination with the signals from the other sensors of the protection device 1, such as for example the accelerometers and/or the gyroscopes. In other words, the control unit 50 may be configured to integrate the barometric signal with the signals from the other sensors, so that an anomalous variation of the barometric signal, detected simultaneously with an anomalous variation of the acceleration and/or angular velocity signals, contributes to the determination of the warning condition by the control unit 50. In this way, the barometric signal provides complementary information that allows the control unit 50 to evaluate with greater accuracy the dynamics of the event undergone by the user, improving the overall reliability of the protection system in the discrimination between an actual warning condition and a normal use condition.

The light sensor or the camera of the portable device 200 may also be employed as sources of additional signals for the determination of a warning condition of the user. In particular, the control unit 50 may be configured to receive and process the signals from the light sensor and/or the camera of the portable device 200 to detect an anomalous variation in distance between the user and external objects, indicative of a possible dangerous situation. For example, the portable device 200, optionally a smartphone, may be positioned on the user so that the camera is oriented towards the surrounding environment, allowing the system to detect sudden variations in the framed scene. The control unit 50 may be configured to integrate the signals from the light sensor and/or the camera with the signals from the other sensors of the protection device 1, such as for example the accelerometers and/or the gyroscopes, so that an anomalous variation of the optical signals, detected simultaneously with an anomalous variation of the acceleration and/or angular velocity signals, contributes to the determination of the warning condition by the control unit 50. In this way, the optical signals provide complementary information that allows the control unit 50 to evaluate with greater accuracy the dynamics of the event and the environmental conditions surrounding the user, improving the overall reliability of the protection system in the discrimination between an actual warning condition and a normal use condition. The portable device 200 may be configured to send a connection signal to the control unit 50 to allow an electrical connection and a data transmission with said control unit. The portable device 200 may comprise a graphical interface GI, optionally a touch-screen, a battery and a controller connected to the battery and to the graphical interface. The controller is configured to send to the graphical interface GI a signal representative of the charge level of the battery of the portable device 200, which is configured to convert said signal emitted by the controller and provide a visual indication of said charge level. The controller of the portable device 200 is further configured to receive a signal from the control unit 50 representative of the type of protection device. The controller is configured to send to the graphical interface GI a signal representative of the type of protection device, which is configured to convert said signal emitted by the controller and provide a visual indication to the user relating to the type of protection device.

The controller of the portable device 200 is configured to send to the control unit 50 a command signal for the activation of the control unit 50 and of the at least one sensor directly connected to said control unit. The sensors in the smartphone are diverse and may be used for various functions of the protection device 1.

The controller of the smartphone is further connected to a memory containing a list of contacts of the user. The controller of the portable device 200 may be configured to receive an alarm signal from the control unit 50 relating to the determination of a warning condition on the part of the user, following reception of the alarm signal to access a predetermined list of contacts stored in the memory of the portable device, and to automatically initiate a communication with a portable device of one or more of said contacts stored in the memory of the portable device. If the portable device 200 comprises a smartphone, the protection device 1 can substantially exploit the mobile network and the mobile data network to make calls and video calls. In this way, the protection device 1 can call the users stored in the portable device 200 of the user.

The protection device 1 may further exploit the graphical interface of the smartphone to have in the protection device 1 all the control and interface functionalities integratable in software of the smartphone. For example, the smartphone may be configured to exploit the voice command communication function to perform certain operations, for example the connection with the control unit 50 and the identification of the type of protection device. Furthermore, the smartphone may exploit the connectivity functionalities for the wireless connection with different devices, for example an intercom or headphones for helmets.

### Wearable system for the protection of a user

The present disclosure also relates to a wearable system for the protection of a user comprising a protection device 1 as described above and a portable device 200 electrically connected to the protection device 1 by a wired connection. The portable device 200 electrically powers the control unit 50 of the protection device 1. In fact, the wearable system comprises the assembly of the protection device 1 and the portable device 200 as a single integrated system, in which the portable device 200 acts as a power supply source for the control unit 50 and, via the wireless communication module 55, as an interface for the exchange of data with the protection device 1.

The portable device 200 is configured to emit at least one of: an acoustic alert signal, a visual signal or a vibration, when it detects the interruption of the wired connection with the control unit 50 of the protection device 1. In other words, if the cable connecting the portable device 200 to the control unit 50 is accidentally disconnected or interrupted during use of the protection device 1, the portable device 200 is able to detect such interruption and emit an alert signal to warn the user. Such functionality is of particular importance since the interruption of the wired connection entails the cessation of the electrical power supply of the control unit 50 and, consequently, the deactivation of the protection system. The user, warned by the alert signal, can therefore immediately reconnect the portable device 200 to the control unit 50 to restore the operation of the protection device 1.

### Activation method

The present disclosure also relates to a method of activation of the protection device 1 in accordance with the appended claims. In particular, the method comprises the steps of providing the protection device 1, engaging at least one pressurized gas container C with the activator 51, and electrically connecting the control unit 50 of the protection device 1 to a portable device 200 so that the latter can electrically power the control unit 50 and the at least one sensor of the protection device 1.

The method further comprises a step of sending by the portable device 200 a command signal to the control unit 50 for the activation of said control unit and said at least one sensor. In particular, the control unit 50 of the protection device 1, following reception of the command signal from the portable device 200, is configured to receive at least one signal from the at least one sensor representative of a condition of the user, compare the received signal with at least one value of a safety parameter, determine, as a function of the comparison, the presence of a warning condition for the user and, if said warning condition is determined, send a command signal to the activator 51 to allow the piercing of the container C and thereby determine the inflated condition of the bladder 2.

The method comprises the electrical connection, for example by cable (optionally of the USB-C, Micro-USB, Lightning, USB-A type) of the control unit 50 and the portable device. Following such electrical connection, the portable device is configured to electrically power and activate the control unit 50 so that the latter can receive signals from one or more sensors to determine the condition of the user.

The portable device 200, following the electrical connection with the control unit 50, is configured to receive at least one signal from the control unit representative of the type of protection device 1. The method comprises the step of selecting by means of the portable device 200, following reception by the portable device 200 of at least one signal from said unit representative of the type of protection device, the desired protection device 1 to allow data communication with the control unit 50. The portable device 200 may comprise at least one of: a smartphone, a tablet.

### Use

The present disclosure also relates to a use of the protection device 1 for the protection of body parts of a user. The protection device 1 may be employed directly as a garment, for example be an integral part of a suit (see for example the schematization of figures 1 and 2), a jacket or a vest (figures 3, 4 and 6), or may be an integral part of an accessory for the protection of the body of a user (optionally at least one of: a back protector, a chest protector, a shoulder protector, a neck protector, a head protector, a pelvis protector, a leg protector).

Alternatively, the protection device 1 may be of the type couplable (fastenable or removably engageable) to a garment or to a protection device for a user.

### Garment

The present disclosure also relates to a garment 100 comprising a protection device 1 in accordance with the appended claims. The garment 100 comprises at least one of: a jacket, a vest, a suit (optionally a motorcycle suit or a motorsport suit), technical sportswear. The garment 100 comprises an outer layer and an inner layer. The protection device 1 may be an integral part of the garment. Alternatively, the protection device 1 may be engaged with an inner layer of the jacket or vest or suit.

For example, the garment 100 may comprise an outer layer defined by at least a part of the second covering 5 of the protection device and/or may have an inner layer defined by at least a part of the first covering 4. In figure 3 there is instead illustrated a garment defined by the entire protection device 1. The protection device 1 of figure 3 essentially constitutes a garment, for example a vest. The first covering 4 defines the entire inner layer of the garment while the second covering defines the outer layer.

## Claims

1. Wearable protection device comprising:
- an activator (51) engageable with a pressurized gas container (C), the activator (51) being configured to act on the container (C) to allow the piercing thereof and the consequent outflow of gas,
- a bladder (2) engaged with the activator (51) and configurable between a deflated condition and an inflated condition, optionally following the piercing of the container by the activator (51),
- a control unit (50) connected to and active in command on the activator (51), wherein the control unit (50) is configured to send a command signal to the activator (51) for piercing of the container (C),
wherein the control unit (50) is configured to receive electrical energy to be electrically powered from at least one portable device (200) connected to the control unit (50).

2. Wearable protection device according to claim 1, wherein the protection device is devoid of a primary power supply source integrated in the protection device or integrated in the control unit (50).

3. Wearable protection device according to any one of the preceding claims, wherein the portable device (200) comprises at least one of: a smartphone, a tablet, a portable battery,
wherein the control unit (50) is configured to be powered by a voltage comprised between 3.5 Volt and 5 Volt, optionally substantially equal to 5 Volt,
wherein the control unit (50) is devoid of an input voltage converter, optionally of the DC-DC type, configured to reduce the voltage received from the portable device (200) to 5 Volt,
wherein the control unit (50) is devoid of circuitry dedicated to the conversion, optionally to the step-down, of an input voltage signal to the same control unit.

4. Wearable protection device according to any one of the preceding claims, wherein the control unit (50) is connectable to the portable device by a cable (75),
wherein the control unit (50), via the cable (75), is configured to receive exclusively electrical energy for its own power supply, without data transfer,
optionally the control unit (50) is configured to electrically connect to the at least one portable device (200) by USB-C cable.

5. Wearable protection device according to any one of the preceding claims, wherein the control unit (50) comprises or is connected to a wireless communication module (55) of the protection device, for the exchange of data with the portable device (200),
wherein the wireless communication module (55) is configured to exclusively exchange data with the portable device (200), without transfer of electrical energy intended for the power supply of the control unit (50),
wherein the wireless communication module comprises at least one of a Bluetooth module, WiFi and NFC.

6. Wearable protection device according to any one of the preceding claims, wherein the control unit (50) is configured to be uninterruptedly powered by the portable device (200) for the entire duration of use of the protection device (1).

7. Wearable protection device according to any one of the preceding claims, wherein the portable device (200) is removably engaged with the control unit (50) of the protection device.

8. Wearable protection device according to any one of the preceding claims when dependent on claim 4, wherein the cable (75) connecting the control unit (50) of the protection device with the mobile device comprises a light indicator (80), optionally an LED, configured for generating one or more light signals,
wherein the control unit (50) is connected to the light indicator (80) and is configured to command the emission of said one or more light signals representative of at least one of the following operative conditions:
- presence of electrical power supply between the control unit (50) and the portable device (200),
- insufficient charge state of a battery of the portable device (200),
wherein the control unit (50) is configured to vary at least one of: light intensity, color and flashing frequency of the light indicator (80) as a function of the operative condition.

9. Wearable protection device according to any one of the preceding claims comprising a GPS module (S3) configured to generate a positioning signal representative of a travel speed of the user,
wherein the control unit (50) is further configured to:
- receive the positioning signal from the GPS module (S3),
- compare said positioning signal with a threshold speed value, optionally greater than 5 km/h, even more optionally comprised between 5 km/h and 15 km/h,
- allow the sending of an activation command to the activator (51) when the positioning signal is equal to or greater than the threshold speed value.

10. Wearable protection device according to the preceding claim, wherein the control unit (50) is further configured to:
- receive a travel speed signal generated by the portable device (200), optionally by a GPS module of the portable device,
- compare the travel speed signal received from the portable device (200) with the threshold speed value,
- allow the sending of an activation command to the activator (51) when both the positioning signal from the GPS module (S3) of the protection device (1) and the travel speed signal from the portable device (200) are equal to or greater than the threshold speed value.

11. Wearable protection device according to any one of the two preceding claims, wherein the control unit (50), if it detects the absence or interruption of the positioning signal from the GPS module (S3), is configured to emit an alarm signal comprising:
- a light signal, optionally emitted via the light indicator (80), and/or
- a warning signal on the portable device (200) comprising at least one of an acoustic signal and a vibration.

12. Wearable protection device according to any one of the preceding claims, wherein the control unit (50) comprises a memory (52) in which personal data relating to the user of the protection device are stored, optionally said personal data comprising at least one of: age, weight, height, physical conditions of the user,
wherein the control unit (50) is configured to select an activation algorithm from a plurality of activation algorithms stored in the memory (52) as a function of said personal data,
wherein each activation algorithm defines evaluation criteria for signals generated by sensors of the protection device, for example said sensors comprising one or more accelerometers or gyroscopes, on the basis of which the activator (51) is commanded.

13. Wearable protection device according to any one of the preceding claims, wherein the control unit (50) of the protection device is configured to:
- receive a signal representative of a charge state of a battery of the portable device (200),
- compare a value of the charge state signal with a threshold charge value, optionally comprised between 5% and 25% of a total charge of the battery,
- command the emission of at least one alarm signal when the value of the charge state signal is lower than the threshold charge value,
wherein said alarm signal comprises at least one of:
- a light signal, optionally emitted by the light indicator (80) of the protection device (1),
- an acoustic signal emitted by the portable device (200),
- a vibration generated by the portable device (200).

14. Wearable system for the protection of a user comprising:
- a wearable protection device (1) according to any one of the preceding claims,
- a portable device (200) electrically connected to the protection device (1) by a wired connection,
wherein the portable device (200) electrically powers the control unit (50) of the protection device (1).

15. Wearable system according to the preceding claim, wherein the portable device (200) is configured to emit at least one of: an acoustic alert signal, a visual signal or a vibration, when it detects the interruption of the wired connection with the control unit (50) of the protection device (1).
